# EUROPEAN PATENT APPLICATION

(11) **EP 4 793 746 A1**
(43) Date of publication of application: **19.08.2026**
(21) Application number: 25829603.7
(22) Date of filing: 29.05.2025
(51) Int. Cl.: G06F 3/0484

(54) **INTERFACE DISPLAY METHOD AND RELATED APPARATUS**

(30) Priority: 20.06.2024 CN 202410808022
(71) Applicant: HUAWEI TECHNOLOGIES CO., LTD., Shenzhen 518129 (CN)
(72) Inventor: XIE, Cheng, Shenzhen, Guangdong 518129 (CN); WU, Yu, Shenzhen, Guangdong 518129 (CN); LUO, Long, Shenzhen, Guangdong 518129 (CN); ZHOU, Jun, Shenzhen, Guangdong 518129 (CN); DING, Yi, Shenzhen, Guangdong 518129 (CN); MAO, Chenyang, Shenzhen, Guangdong 518129 (CN)
(74) Representative: Pfenning, Meinig & Partner mbB
(86) International application number: PCT/CN2025/097960
(87) International publication number: WO 2025/261122

(57) **Abstract**

This application provides an interface display method and a related apparatus, and relates to the field of terminal technologies. The method includes: displaying a first widget on a display screen. The first widget includes a first edge, a second edge, and a third edge. The first edge and the second edge are close to an edge of the display screen, and both a curve of the first edge and a curve of the second edge match a curve of the edge of the display screen. In a process in which the first widget moves in a first direction of the display screen, a form of the first widget changes, to enable both the curve of the first edge and the curve of the second edge to always match the curve of the edge of the display screen. In addition, the third edge of the first widget moves in the first direction as the first widget moves, and a length of the third edge changes, to enable the length of the third edge always not to exceed a display width of the display screen. In this way, the form of the first widget can adapt to the edge of the display screen, which reduces occurrence of incomplete widget display because the widget is clipped by the display screen.

## Description

This application claims priority to Chinese Patent Application No. 202410808022.4, filed with the China National Intellectual Property Administration on June 20, 2024 and entitled "INTERFACE DISPLAY METHOD AND RELATED APPARATUS", which is incorporated herein by reference in its entirety.

### TECHNICAL FIELD

Embodiments of this application relate to the field of terminal technologies, and in particular, to an interface display method and a related apparatus.

### BACKGROUND

A smartwatch is a new type of wearable device, and has advantages such as portability, ease of use, and rich functions. A user may view various types of content, for example, time, an application notification message, weather, and a sports status, on a display screen of the smartwatch. When there is a large amount of content, all content cannot be displayed on the display screen at a time. The user may control, by using a sliding operation, the display screen to display related content in a sliding manner.

However, when the smartwatch displays the related content in the sliding manner, the related content may be clipped by an edge of the display screen, resulting in occurrence of incomplete related content display.

### SUMMARY

This application provides an interface display method and a related apparatus, and is applied to the field of terminal technologies, to reduce occurrence of incomplete widget display.

According to a first aspect, an interface display method is provided, and the method includes: displaying a first widget on a display screen. The first widget includes a first edge, a second edge, and a third edge. The first edge and the second edge are close to an edge of the display screen, and both a curve of the first edge and a curve of the second edge match a curve of the edge of the display screen. In a process in which the first widget moves in a first direction of the display screen, a form of the first widget changes, to enable both the curve of the first edge and the curve of the second edge to always match the curve of the edge of the display screen. In addition, the third edge of the first widget moves in the first direction as the first widget moves, and a length of the third edge changes, to enable the length of the third edge always not to exceed a display width of the display screen.

In this embodiment of this application, the display screen may be understood as a display area of a physical display screen, or may be understood as a display component, that is, a virtual display space. This is not specifically limited herein.

The curve of the first edge and the curve of the second edge match the curve of the edge of the display screen, to enable the first edge and the second edge to adapt to the edge of the display screen, and enables the length of the third edge not to exceed a display length of the display screen. In this way, the first widget may be in a straight line or any curve. This is not specifically limited herein. The first direction may correspond to a direction that corresponds to an edge that is of the display screen and that is farthest from the third edge.

For example, the first widget may correspond to a widget provided in embodiments of this application below. The first edge and the second edge may respectively correspond to a left edge and a right edge below. The third edge may correspond to a lower edge below, and the first direction may correspond to a vertical upward direction.

In this way, the form of the first widget among widgets can adapt to the edge of the display screen, which reduces occurrence of incomplete widget display because the widget is clipped by the display screen.

In some embodiments, in the process in which the first widget moves in the first direction, a size of the first widget changes with a distance between the third edge and the edge of the display screen in the first direction.

In a possible implementation, the display screen is circular. In this way, the method may be applicable to a circular display screen, for example, a circular display component or a circular display screen of a watch. This is not specifically limited herein.

In a possible implementation, the curve of the first edge and the curve of the second edge satisfy a preset similarity with the curve of the edge of the display screen.

In this embodiment of this application, the preset similarity may be 90%, 95%, or any value. This is not specifically limited herein.

In this way, an edge of a widget may be changed based on a curve similarity, to enable the curve of the first edge and the curve of the second edge to match the curve of the edge of the display screen.

In a possible implementation, both the first edge and the second edge are attached to the edge of the display screen.

In this way, the first edge and the second edge of the widget are attached to the edge of the display screen, which allows a size of the widget to be large, and improves a utilization rate of the display screen. If the first edge and the second edge correspond to the left edge and the right edge below, the widget may cover the display screen in a horizontal direction, the size of the widget is large, and more content may be displayed.

In a possible implementation, there is a first corner between the first edge and the third edge, to enable the first edge to be smoothly connected to the third edge. There is a second corner between the second edge and the third edge, to enable the second edge to be smoothly connected to the third edge. In the process in which the first widget moves in the first direction of the display screen, a size of the first corner changes with a distance between the third edge and the edge of the display screen in the first direction, to enable the first edge to always be smoothly connected to the third edge. In addition, a size of the second corner changes with the distance between the third edge and the edge of the display screen in the first direction, to enable the second edge to always be smoothly connected to the third edge.

In this way, adjacent edges are connected through a corner, to enable the adjacent edges to smoothly connected, and improve display effect of a widget. In some embodiments, the corner may be a rounded corner or a corner of any type.

In a possible implementation, the first widget further includes first content. In the process in which the first widget moves in the first direction of the display screen, the first content changes with the size of the first widget, to enable the first content not to exceed an edge of the first widget.

The first content may be any content, for example, message content, a message title, a timestamp, an application icon, and a text in the following. The first content may be changed in a manner shown in the following embodiments, for example, scaling down, scaling up, changing opacity, reducing displayed content, or increasing displayed content. The first content may also be changed in any other manner. This is not specifically limited herein.

In this way, content of a widget may change with a size of the widget, to reduce a case in which the content exceeds an edge of the widget, and reduce occurrence of incomplete content display because the content is clipped by the edge of the display screen.

In a possible implementation, the first content is not displayed when the length of the third edge is less than a first length.

In this way, when a size of a widget is small, the first content may not be displayed, which reduces occurrence of incomplete content display, improves display effect of the widget on an interface, and improves user experience.

In a possible implementation, the first widget further includes a fourth edge, and the fourth edge and the third edge are disposed opposite to each other. When the fourth edge moves to the edge of the display screen, the fourth edge disappears.

In this way, when any edge of a widget slides to the edge of the display screen, the edge disappears, to adapt to the edge of the display screen. For example, when the fourth edge slides to the edge of the display screen, a form of the widget may correspond to a form A or a form C below.

In a possible implementation, the first widget further includes second content. In the process in which the first widget moves in the first direction of the display screen, when the length of the third edge is less than a second length, the second content is not displayed, and the second length is less than the first length.

The second content may be any content, for example, an application identifier (for example, an application icon or an application name) or a message count badge below. The second content may also be changed in a manner shown in the following embodiments, for example, scaling down, scaling up, changing opacity, reducing displayed content, or increasing displayed content. The first content may also be changed in any other manner. This is not specifically limited herein.

In this way, when a size of a widget is small, the second content may not be displayed, which reduces occurrence of incomplete content display, improves display effect of the widget on an interface, and improves user experience.

It may be understood that the content of the widget may be divided into a plurality of pieces of content. As the size of the widget changes, a part of the plurality of pieces of content may be gradually displayed or may not be displayed on the widget. A content change of the widget is not specifically limited in embodiments of this application.

In a possible implementation, there is a third corner between the first edge and the fourth edge, to enable the first edge to be smoothly connected to the fourth edge. There is a fourth corner between the second edge and the fourth edge, to enable the second edge to be smoothly connected to the fourth edge. In the process in which the first widget moves in the first direction of the display screen, a size of the third corner changes with a distance between the fourth edge and the edge of the display screen in the first direction, to enable the fourth edge to always be smoothly connected to the first edge. In addition, a size of the fourth corner changes with the distance between the fourth edge and the edge of the display screen in the first direction, to enable the fourth edge to always be smoothly connected to the second edge.

In this way, adjacent edges are connected through a corner, to enable the adjacent edges to smoothly connected, and improve display effect of a widget. In some embodiments, the corner may be a rounded corner or a corner of any type.

In a possible implementation, in a process in which the first widget moves in a second direction of the display screen, the form of the first widget changes, to enable both the curve of the first edge and the curve of the second edge to always match the curve of the edge of the display screen. In addition, the fourth edge of the first widget moves in the second direction as the first widget moves, and a length of the fourth edge changes, to enable the length of the fourth edge always not to exceed the display width of the display screen.

The second direction may correspond to a direction that corresponds to an edge that is of the display screen and that is farthest from the fourth edge. When the first widget slides in the second direction, the form of the first widget can adapt to the edge of the display screen, which reduces occurrence of incomplete widget display because the widget is clipped by the display screen.

In a possible implementation, when the first widget is displayed on the display screen, a second widget is further displayed on the display screen. The second widget includes a fifth edge, a sixth edge, and a seventh edge. The fifth edge and the sixth edge are close to the edge of the display screen, and both a curve of the fifth edge and a curve of the sixth edge match the curve of the edge of the display screen. In a process in which the second widget moves in the first direction of the display screen, a form of the second widget changes, to enable the curve of the fifth edge and the curve of the sixth edge to always match the curve of the edge of the display screen. In addition, the seventh edge of the second widget moves in the first direction as the second widget moves, and a length of the seventh edge changes, to enable the length of the seventh edge always not to exceed the display width of the display screen.

In this way, a plurality of widgets may be simultaneously displayed, and the plurality of widgets may all adapt to the edge of the display screen, which reduces occurrence of incomplete widget display because the widget is clipped by the display screen.

According to a second aspect, an embodiment of this application provides an interface display apparatus. The interface display apparatus may be an electronic device, or may be a chip or a chip system in the electronic device. The interface display apparatus may include a display unit and a processing unit. When the interface display apparatus is the electronic device, the display unit herein may be a display screen. The display unit is configured to perform a displaying step, so that the electronic device implements the interface display method described in the first aspect or any possible implementation of the first aspect. When the interface display apparatus is the electronic device, the processing unit may be a processor. The interface display apparatus may further include a storage unit, and the storage unit may be a memory. The storage unit is configured to store instructions, and the processing unit executes the instructions stored in the storage unit, so that the electronic device implements the interface display method described in the first aspect or any possible implementation of the first aspect. When the interface display apparatus is the chip or the chip system in the electronic device, the processing unit may be a processor. The processing unit executes the instructions stored in the storage unit, so that the electronic device implements the interface display method described in the first aspect or any possible implementation of the first aspect. The storage unit may be a storage unit (for example, a register or a cache) in the chip, or may be a storage unit (for example, a read-only memory or a random access memory) that is in the electronic device and that is outside the chip.

For example, the display unit is configured to display a widget. Curves of a part of edges of the widget all match a curve of an edge of the display screen.

The processing unit is configured to: in a process in which the widget moves, control a form of the widget to change, to enable all curves of the part of the edges of the widget to always match the curve of the edge of the display screen.

In a possible implementation, the display unit is configured to display a first widget. The first widget includes a first edge, a second edge, and a third edge. The first edge and the second edge are close to an edge of the display screen, and both a curve of the first edge and a curve of the second edge match a curve of the edge of the display screen.

The processing unit is configured to: in a process in which the first widget moves in a first direction of the display screen, control a form of the first widget to change, to enable both the curve of the first edge and the curve of the second edge to always match the curve of the edge of the display screen; and control the third edge of the first widget to move, along with sliding, in the first direction, to enable the length of the third edge always not to exceed a display length of the display screen.

In some embodiments, in the process in which the first widget moves in the first direction of the display screen, the processing unit is further configured to control a size of the first widget to change with a distance between the third edge and the edge of the display screen in the first direction.

In a possible implementation, the processing unit is further configured to control the curve of the first edge and the curve of the second edge to satisfy a preset similarity with the curve of the edge of the display screen.

In a possible implementation, there is a first corner between the first edge and the third edge, to enable the first edge to be smoothly connected to the third edge. There is a second corner between the second edge and the third edge, to enable the second edge to be smoothly connected to the third edge. In the process in which the first widget moves in the first direction of the display screen, the processing unit is further configured to control a size of the first corner to change with a distance between the third edge and the edge of the display screen in the first direction, to enable the first edge to always be smoothly connected to the third edge. In addition, the processing unit is further configured to control a size of the second corner to change with the distance between the third edge and the edge of the display screen in the first direction, to enable the second edge to always be smoothly connected to the third edge.

In a possible implementation, in the process in which the first widget moves in the first direction of the display screen, the processing unit is further configured to control first content to change with the size of the first widget, to enable the first content not to exceed an edge of the first widget.

In a possible implementation, when the length of the third edge is less than the first length, the processing unit is further configured to control the display unit not to display the first content.

In a possible implementation, in the process in which the first widget moves in the first direction of the display screen, when the length of the third edge is less than a second length, the processing unit is further configured to control the display unit not to display second content, and the second length is less than the first length.

In a possible implementation, there is a third corner between the first edge and the fourth edge, to enable the first edge to be smoothly connected to the fourth edge. There is a fourth corner between the second edge and the fourth edge, to enable the second edge to be smoothly connected to the fourth edge. In the process in which the first widget moves in the first direction of the display screen, the processing unit is further configured to control a size of the third corner to change with a distance between the fourth edge and the edge of the display screen in the first direction, to enable the fourth edge to always be smoothly connected to the first edge. In addition, the processing unit is further configured to control a size of the fourth corner to change with the distance between the fourth edge and the edge of the display screen in the first direction, to enable the fourth edge to always be smoothly connected to the second edge.

In a possible implementation, in a process in which the first widget moves in a second direction of the display screen, the processing unit is further configured to control the form of the first widget to change, to enable both the curve of the first edge and the curve of the second edge to always match the curve of the edge of the display screen. In addition, the processing unit is further configured to control the fourth edge of the first widget to move in the second direction as the first widget moves, and control a length of the fourth edge to change, to enable the length of the fourth edge always not to exceed the display width of the display screen.

In a possible implementation, when the first widget is displayed on the display screen, the display unit is further configured to display a second widget on the display screen. The second widget includes a fifth edge, a sixth edge, and a seventh edge. The fifth edge and the sixth edge are close to the edge of the display screen, and both a curve of the fifth edge and a curve of the sixth edge match the curve of the edge of the display screen. In a process in which the second widget moves in the first direction of the display screen, the processing unit is further configured to: control a form of the second widget to change, to enable both the curve of the fifth edge and the curve of the sixth edge to always match the curve of the edge of the display screen; and control the seventh edge of the second widget to move in the first direction as the second widget to move, and a length of the seventh edge to change, to enable the length of the seventh edge always not to exceed a display width of the display screen.

According to a third aspect, an embodiment of this application provides an electronic device, including a processor and a memory. The memory is configured to store code instructions, and the processor is configured to run the code instructions, to perform the method described in the first aspect or any possible implementation of the first aspect.

According to a fourth aspect, an embodiment of this application provides a computer-readable storage medium. The computer-readable storage medium stores a computer program or instructions. When the computer program or the instructions are run on a computer, the computer is enabled to perform the method described in the first aspect or any possible implementation of the first aspect.

According to a fifth aspect, an embodiment of this application provides a computer program product including a computer program. When the computer program runs on a computer, the computer is enabled to perform the method described in the first aspect or any possible implementation of the first aspect.

According to a sixth aspect, this application provides a chip or a chip system. The chip or the chip system includes at least one processor and a communication interface. The communication interface and the at least one processor are interconnected through a line. The at least one processor is configured to run a computer program or instructions, to perform the method described in the first aspect or any possible implementation of the first aspect. The communication interface in the chip may be an input/output interface, a pin, a circuit, or the like.

In a possible implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

It should be understood that the second aspect to the sixth aspect of this application correspond to the technical solutions of the first aspect of this application, and beneficial effects achieved by the aspects and the corresponding feasible implementations are similar. Details are not described again.

### BRIEF DESCRIPTION OF DRAWINGS

FIG. 1 is a diagram of an interface of a circular display screen in a possible design;
FIG. 2 is a diagram of forms of a widget according to an embodiment of this application;
FIG. 3 is a diagram of a structure of the widget in various forms shown in FIG. 2 according to an embodiment of this application;
FIG. 4 is a diagram of an interface of a display screen according to an embodiment of this application;
FIG. 5A and FIG. 5B are a diagram of a change of a widget sliding from a center of a display screen toward an edge of the display screen according to an embodiment of this application;
FIG. 6 is a diagram of a structure of an area related to content display on a widget according to an embodiment of this application;
FIG. 7 is a diagram of a layout of pieces of content of a widget according to an embodiment of this application;
FIG. 8A and FIG. 8B are a diagram of a change of widget content when a widget switches from a form B to a form A according to an embodiment of this application;
FIG. 9 is a diagram of a change of widget content when a widget disappears in a form A according to an embodiment of this application;
FIG. 10A and FIG. 10B are a diagram of a change of a widget sliding from a center of a display screen toward an edge of the display screen according to an embodiment of this application;
FIG. 11A and FIG. 11B are a diagram of a change of widget content when a widget switches from a form B to a form C according to an embodiment of this application;
FIG. 12 is a diagram of a change of widget content when a widget disappears in a form C according to an embodiment of this application;
FIG. 13 is a diagram of a change of each widget in a sliding scenario according to an embodiment of this application;
FIG. 14 is a diagram of a structure of an interface display apparatus according to an embodiment of this application; and
FIG. 15 is a diagram of a hardware structure of an electronic device according to an embodiment of this application.

### DESCRIPTION OF EMBODIMENTS

To clearly describe the technical solutions in embodiments of this application, the following briefly describes some terms and technologies used in embodiments of this application.

### 1. Electronic device

The electronic device in embodiments of this application may include a handheld device, a vehicle-mounted device, or the like that has an image processing function. For example, some electronic devices may be a mobile phone (mobile phone), a tablet computer, a palmtop computer, a notebook computer, a mobile internet device (mobile internet device, MID), a wearable device (such as a smartwatch, smart glasses, a smart band, or smart jewelry), a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a terminal device in an internet of things (internet of things, IoT) system, a terminal device in a future 5G network, a terminal device in a future evolved public land mobile network (public land mobile network, PLMN), and the like. This is not limited in embodiments of this application.

The electronic device in embodiments of this application may also be referred to as a terminal device, user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

In embodiments of this application, the electronic device or each network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

### 2. Other terms

In embodiments of this application, the terms "first", "second", and the like are used to distinguish between same items or similar items that have basically same functions and purposes. For example, a first value and a second value are merely used to distinguish between different values, and a sequence thereof is not limited. A person skilled in the art may understand that the terms such as "first" and "second" do not limit a quantity or an execution sequence, and the terms such as "first" and "second" do not indicate a definite difference.

It should be noted that, in embodiments of this application, the word "example" or "for example" or the like represents giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

In embodiments of this application, "at least one" means one or more, and "a plurality of" means two or more. "And/or" describes an association relationship between associated objects, and represents that three relationships may exist. For example, A and/or B may indicate the following three cases: Only A exists, both A and B exist, and only B exists, where A and B may be in a singular form or a plural form. The character "/" generally indicates an "or" relationship between associated objects. At least one of the following items (pieces) or a similar expression thereof indicates any combination of these items, including a single item (piece) or any combination of a plurality of items (pieces). For example, at least one item (piece) of a, b, or c may represent a, b, c, a and b, a and c, b and c, or a, b, and c, where a, b, and c may be singular or plural.

One or more applications are installed in an electronic device such as a watch. After receiving a message of an application, the electronic device such as a watch may display the message in a form of a widget on a notification list interface.

In a possible design, all widgets displayed on a display screen are rectangular. However, when the rectangular widget is displayed on a circular display screen or a circular display component, a case in which the widget is clipped by an edge of the circular display screen, and the widget is incompletely displayed may occur. In addition, the rectangular widget does not fully occupy the circular display screen, and therefore, a screen utilization rate of the display screen is low, and less content is displayed.

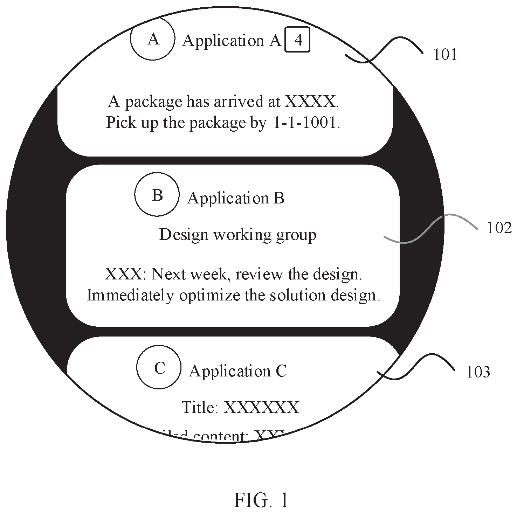

For example, FIG. 1 is a diagram of an interface of a circular display screen in a possible design. It should be understood that this application may also be applied to a case in which a display screen is non-circular but has a circular display component, and a rectangular widget needs to be displayed in the component, and another similar case. A circle in this application may be a standard circle in a mathematical sense, or may be a non-standard circle having a radian, for example, an ellipse or another irregular circle.

As shown in FIG. 1, a widget 101, a widget 102, and a widget 103 are included. All of the widget 101, the widget 102, and the widget 103 are rectangular, and have a same length in a horizontal direction. It can be learned from FIG. 1 that because the circular display screen is small, the widget 101 is clipped by an upper edge of the display screen, and content is incompletely displayed; and the widget 103 is clipped by a lower edge of the display screen, and content is incompletely displayed. In addition, on the interface, there is still some space on two sides of the widget 102, and the space is not used.

In view of this, embodiments of this application provide an interface display method and a related apparatus. Curves of a part of edges of a widget match a curve of an edge of the display screen, to adapt to the edge of the display screen, and reduce occurrence of incomplete widget display because the widget is clipped by the display screen. In addition, in a process in which the widget moves, a form of the widget may change, to enable the curves of the part of the edges of the widget to always match the curve of the edge of the display screen.

For example, for the circular display screen or the circular display component, a widget in a plurality of forms is provided. A widget in any form has a part of edges whose curves match the curve of the edge of the display screen. In this way, the part of edges of the widget match the edge of the display screen, which reduces a visual problem that the widget is clipped by the edge of the circular display screen. In addition, the widget may switch between different forms based on a position of the widget. This can reduce occurrence of incomplete widget display because the widget is clipped by the circular display screen in a sliding process.

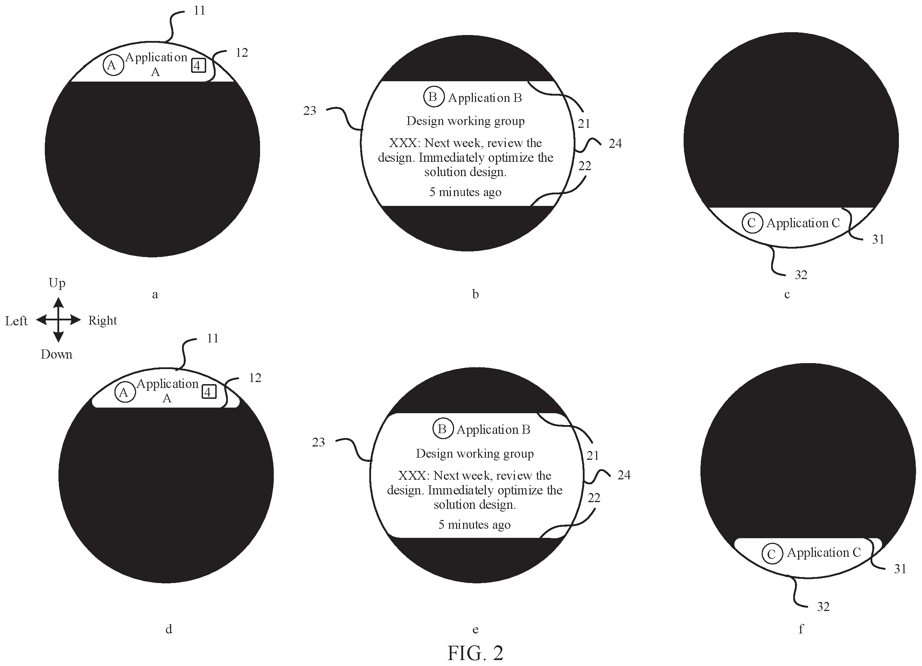

For ease of understanding, the following describes, with reference to FIG. 2, different widget forms provided in embodiments of this application.

For example, FIG. 2 is a diagram of three forms of a widget according to an embodiment of this application. An example in which a part of edges of a widget are attached to an edge of the display screen is used. The widget may include a form A, a form B, and a form C.

As shown in a and d in FIG. 2, the widget in the form A includes an edge 11 and a lower edge 12. A radian of the edge 11 is the same as a radian of an upper edge of the display screen, and the lower edge 12 of the widget 201 is parallel to a horizontal direction of the display screen. In this way, the widget may be attached to the edge of the display screen, which reduces the visual problem that the widget is clipped by the edge of the circular display screen.

As shown in b and e in FIG. 2, the widget in the form B includes an upper edge 21, a lower edge 22, a left edge 23, and a right edge 24. A radian of the left edge 22 is the same as the radian of the upper edge of the display screen, and the right edge 24 of the widget 201 is parallel to the horizontal direction of the display screen. In this way, the widget may be attached to the edge of the display screen, which reduces the visual problem that the widget is clipped by the edge of the circular display screen.

As shown in c and f in FIG. 2, the widget in the form C includes an upper edge 31 and an edge 32. The upper edge 31 is parallel to the horizontal direction of the display screen. A radian of the edge 32 is the same as the radian of the upper edge of the display screen. In this way, the widget may be attached to the edge of the display screen, which reduces the visual problem that the widget is clipped by the edge of the circular display screen.

It should be understood that in the embodiment shown in FIG. 2, matching between a part of edges of the widget and the edge of the display screen is implemented by making radians of the part of edges of the widget the same as a radian of the edge of the display screen, or matching between the part of edges of the widget and the edge of the display screen may be implemented in any other manner, for example, based on a similarity between the radians of the part of edges and the edge of the display screen. This is not specifically limited herein.

In this embodiment of this application, a corner between adjacent edges of a widget in various forms may be a corner formed through edge clipping (as shown in a to c in FIG. 2), or may be a rounded corner with a specific radian (as shown in d to f in FIG. 2) or a corner of any other type. This is not specifically limited herein.

In some embodiments, when the corner is the rounded corner, a size of the rounded corner may be a fixed value, or it may be understood that sizes of rounded corners corresponding to all widgets may be the same. In this way, because the size of the rounded corner remains unchanged, the size of the corner does not need to be calculated in a subsequent widget sliding process, which reduces a calculation amount of widget display, and facilitates implementation.

In some other embodiments, the size of the rounded corner may alternatively be positively correlated with a size of the widget. In this way, when the size of the rounded corner is positively correlated with the size of the widget, in the subsequent widget sliding process, the size of the rounded corner better matches a size change of the widget, the widget displayed on the interface is more beautiful, and display effect is good.

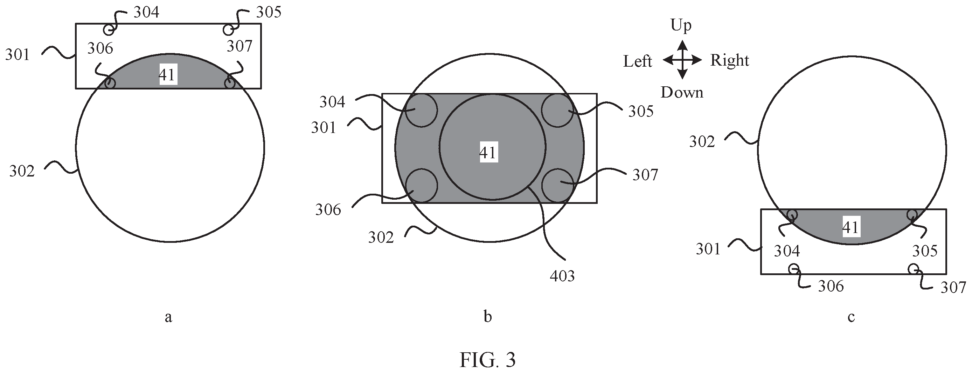

The foregoing describes the three forms of the widget in FIG. 2. The following describes, with reference to FIG. 3, a manner of determining a size and the forms of the widget.

In this embodiment of this application, the electronic device may determine the size and the forms of the widget by using an overlapping area between a rectangular area and a display screen area. The display screen area corresponds to a display area of the display screen.

Specifically, when an upper edge of the rectangular area is located in the display screen area, the upper edge of the widget is an upper edge of the rectangular area. When the upper edge of the rectangular area is not located in the display screen area, the upper edge of the widget is an edge of the display screen area, and the widget does not include a left edge and a right edge. When a lower edge of the rectangular area is located in the display screen area, the lower edge of the widget is a lower edge of the rectangular area. When the lower edge of the rectangular area is not located in the display screen area, the lower edge of the widget is an edge of the display screen area, and the widget does not include the left edge and the right edge.

For example, FIG. 3 is a diagram of a structure of the widget in various forms shown in FIG. 2 according to an embodiment of this application. As shown in FIG. 3, the widget may be determined based on a rectangular area 301 and a display screen area 302.

As shown in a in FIG. 3, when a part of a lower edge of the rectangular area 301 is located in the display screen area 302, and none of an upper edge of the rectangular area 301 is located in the display screen area 302, the rectangular area 301 and the display screen area 302 are superposed to obtain an overlapping area 41. Edges of the widget are all the same as edges of the overlapping area 41, and the widget is in the form A.

As shown in b in FIG. 3, when a part of the upper edge of the rectangular area 301 is located in the display screen area 302, and a part of the lower edge of the rectangular area 301 is located in the display screen area 302, the rectangular area 301 and the display screen area 302 are superposed to obtain an overlapping area 42. Edges of the widget are all the same as edges of the overlapping area 42, and the widget is in the form B.

As shown in c in FIG. 3, when a part of the upper edge of the rectangular area 301 is located in the display screen area 302, and none of the lower edge of the rectangular area 301 is located in the display screen area 302, the rectangular area 301 and the display screen area 302 are superposed to obtain an overlapping area 43. Edges of the widget are all the same as edges of the overlapping area 43, and the widget is in the form C.

It can be learned from FIG. 3 that the size of the widget is related to a size of the overlapping area, and the overlapping area is related to both a size of the rectangular area and a relative position between the rectangular area and the display screen area. It may be understood that a shorter distance between a center of the rectangular area and a center of the display screen area indicates a larger size of the overlapping area, and a larger size of the rectangular area indicates a larger size of the overlapping area.

In some embodiments, the size of the rectangular area is fixed. A shorter distance between the center of the rectangular area and the center of the display screen area indicates a larger size of the overlapping area and a larger size of the widget.

In some embodiments, the size of the rectangular area is negatively correlated with a distance A. The distance A is a distance between the center of the rectangular area and the center of the display screen area. It may also be understood that a shorter distance between the center of the rectangular area and the center of the display screen area indicates a longer farthest distance between an upper edge and a lower edge of the overlapping area, and a larger size of the widget. In this way, more information can be displayed. A shorter distance between the center of the rectangular area and the center of the display screen area indicates a shorter farthest distance between the upper edge and the lower edge of the widget in the overlapping area, and a smaller size of the widget. In this way, an edge that is of the widget and that is attached to the display screen is narrowed, and more information can be displayed.

Alternatively, it may be understood that the size of the widget displayed on the interface is positively correlated with a distance B. The distance B is a minimum distance between a center point of the rectangular area and the edge of the display screen in a vertical direction. It may also be understood that a shorter distance between the center of the rectangular area and the center of the display screen area indicates a larger size of the widget. In this way, more information can be displayed. A longer distance between the center of the rectangular area and the center of the display screen area indicates a smaller size of the widget. In this way, the edge that is of the widget and that is attached to the display screen is narrowed, and more information can be displayed.

In some embodiments, when the center of the rectangular area is located in a circular area 303, the size of the rectangular area is negatively correlated with the distance A. When the center of the rectangular area is not located in the circular area 303, the size of the rectangular area is fixed.

Based on the foregoing embodiment, the electronic device may further determine a shape of a corner of the widget based on a circular area located in the rectangular area. Specifically, the shape of the corner of the widget is determined based on a tangent point at which the circular area is tangent to an edge of the rectangular area and a tangent point at which the circular area is tangent to an edge of the display screen area. It may also be understood that a line segment between the two tangent points forms the corner of the widget.

For example, as shown in FIG. 3, the interface may further include a circular area 304 to a circular area 307 that are located in the rectangular area 301. Both the circular area 304 and the circular area 305 are tangent to the upper edge of the rectangular area 301, and both the circular area 306 and the circular area 307 are tangent to the lower edge of the rectangular area 301. The circular area 304 to the circular area 307 are further tangent to the display screen area 302.

In this way, positions of the circular area 304 to the circular area 307 may be determined based on an edge of the rectangular area 301 and an edge of the display screen area 302. Tangent points between circular areas in the circular area 307 to the circular area 314 and a corresponding rectangular area, and tangent points between the circular areas and the display screen area 302 may be used to determine the corner of the widget.

It should be noted that on the widget in the form A, because the upper edge of the rectangular area 301 does not overlap the edge of the display screen area 302, the overlapping area 41 does not include the upper edge of the rectangular area 301, and a corner of the widget 201 does not need to be determined based on the circular area 304 and the circular area 305.

On the widget in the form B, because the lower edge of the rectangular area 301 does not overlap the edge of the display screen area 302, the overlapping area 43 does not include the upper edge of the rectangular area 301, and the corner of the widget 203 does not need to be determined based on the circular area 306 and the circular area 307.

In this embodiment of this application, radii of the circular area 304 to the circular area 307 may be fixed, or may be related to the position of each circular area.

In a possible implementation 1, the radius of each of the circular area 304 to the circular area 307 is negatively correlated with a distance C. The distance C is a distance between a center of each circular area and a center of the display screen area 302. For example, the circular area 304 is used as an example. When the distance between the center of the circular area 304 and the center of the display screen area 302 is longer, the radius of the circular area 304 is smaller. A shorter distance between the center of the circular area 304 and the center of the display screen area 302 indicates a larger radius of the circular area 304. In this way, a size of the corner may change with the position of the circular area, which makes the widget more beautiful, and improves display effect of the widget.

In a possible implementation 2, the radius of each of the circular area 304 to the circular area 307 is positively correlated with a size of the rectangular area 301. For example, the circular area 304 is used as an example. A larger size of the rectangular area 301 indicates a larger radius of the circular area 304. A smaller size of the rectangular area 301 indicates a smaller radius of the circular area 304. In this way, a size of the corner may change with the size of the rectangular area, which makes the widget more beautiful, and improves display effect of the widget.

In a possible implementation 3, the radii of the circular area 304 and the circular area 305 are negatively correlated with a distance D. The distance D is a shortest distance between the upper edge of the rectangular area 301 and the center of the display screen area 302. The radii of the circular area 304 and the circular area 305 are negatively correlated with a distance E. The distance E is a shortest distance between the lower edge of the rectangular area 301 and the center of the display screen area 302.

In some embodiments, when the distance D is greater than or equal to a radius of the display screen area 302, the radii of the circular area 304 and the circular area 305 are zero. When the distance E is greater than or equal to the radius of the display screen area 302, the radii of the circular area 306 and the circular area 307 are zero. In this way, a case in which a circular area cannot be tangent to both the display screen area 302 and the rectangular area 301 can be reduced, and a case in which the widget is not a rounded corner can be reduced.

In this way, the size of the corner may change with a position of the upper edge or the lower edge of the rectangular area, which makes the widget more beautiful, and improves display effect of the widget.

It should be understood that in the embodiment shown in FIG. 3, the rectangular area 301 and the display screen area 302 are superimposed to determine the edge of the widget and change the size of the widget. The electronic device may further determine the edge of the widget and change the size of the widget in any other manner. For example, the electronic device performs calculation based on a position of an edge (for example, the lower edge or the upper edge) of the widget and the edge of the display screen area, to obtain the edge of the widget and the size of the widget. In this embodiment of this application, the form of the widget, determining of a position of the widget, and the like are all not specifically limited. Similarly, the manner of determining the corner between adjacent edges of the widget in the foregoing embodiment is merely an example. The electronic device may further determine the corner in any other manner. This is not specifically limited herein.

FIG. 2 and FIG. 3 describe the forms and the size of the widget displayed on the interface. The following describes use of a widget on an interface with reference to a specific interface.

In this embodiment of this application, an interface of the display screen may include any one, any two, or three of the foregoing three widget forms. The interface to which the widget may be applied and that is displayed on the display screen may include one or more widgets.

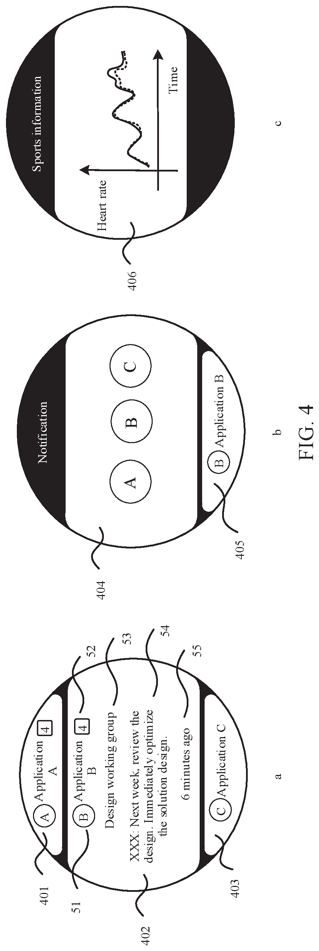

For example, FIG. 4 is a diagram of the interface of the display screen according to an embodiment of this application. As shown in a in FIG. 4, the interface includes a widget 401, a widget 402, and a widget 403. The widget 401 is in the form A, the widget 402 is in the form B, and the widget 403 is in the form C. As shown in b in FIG. 4, the interface includes a widget 404 and a widget 405. The widget 404 is in the form B, and the widget 405 is in the form C. As shown in c in FIG. 4, the interface includes a widget 406. The widget 406 is the form B.

It can be learned from FIG. 4 that the widget may be used to display a notification message, which is convenient for a user to know the notification message. For example, an application identifier (for example, an application icon and/or an application name) 51, a message count badge 52, a message title 53, message content 54, and a timestamp 55 may be displayed on the widget 402.

The widget may be further used to display a plurality of application icons, which is convenient for the user to start a corresponding application. For example, the widget 404 includes an icon of an application A, an icon of an application B, and an icon of an application C.

The widget may be further used to display specific content of an application. For example, a heart rate change curve is displayed on the widget 406.

The interface shown in FIG. 4 is merely used as an example, and does not constitute a limitation on display of the interface. In addition, the foregoing interface is described by using an example in which the interface includes a widget in the form B (for example, the interface includes the widget 402). The interface may further include two or more widgets in the form B. A form of a widget, a quantity of widgets, a size of a widget, and the like displayed on the interface are not specifically limited in embodiments of this application.

It may be understood that this embodiment of this application is described by using three forms as an example. More or fewer forms may alternatively be included. This is not specifically limited herein.

It may be understood that because a display screen of an electronic device such as a watch is small, the electronic device cannot display all content at a time. The user may control, by using a sliding operation, the display screen to display related content in a sliding manner. In a sliding process, a position of the widget displayed on the interface changes. To adapt to display of the display screen, the form of the widget and content of the widget may also change.

In this embodiment of this application, when the widget slides from a center of the display screen to an edge of the display screen, one or more of the following changes may be included: switching from the form B to the form A, switching from the form B to the form C, scaling down of a size of the widget, disappearance of a part of content of the widget, scaling down of a part of content of the widget, and the like.

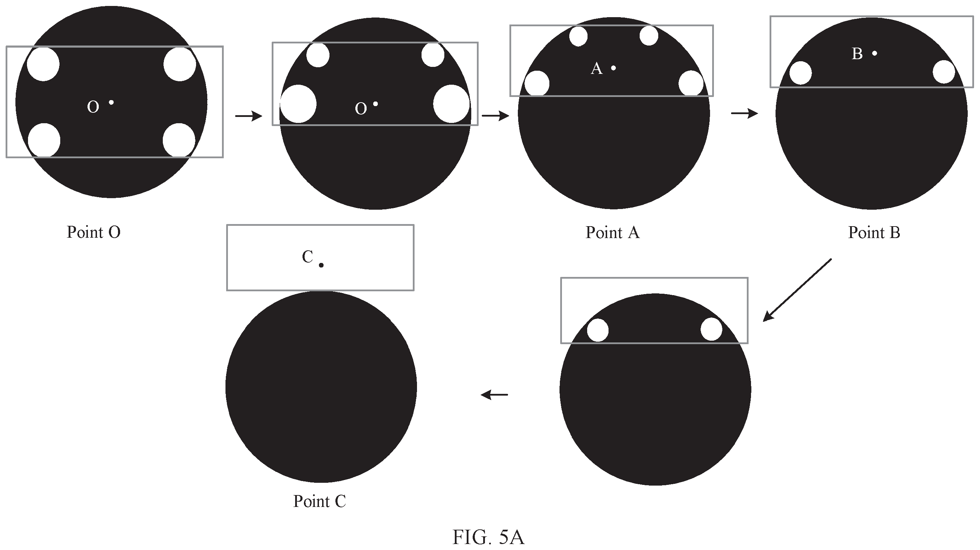

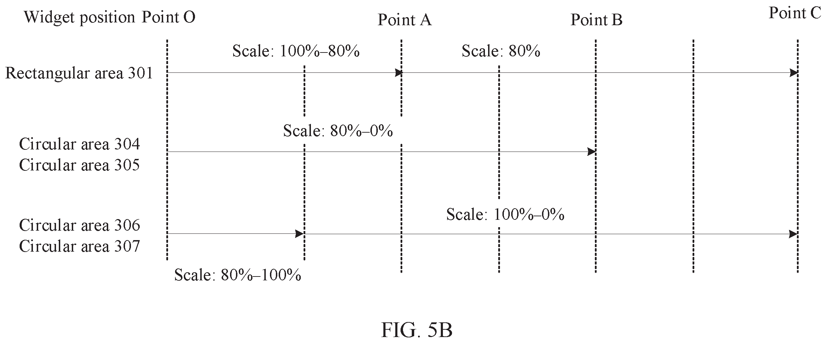

For example, FIG. 5A and FIG. 5B are a diagram of a change of a widget sliding from the center of the display screen toward the edge of the display screen according to an embodiment of this application. An example in which the widget is determined based on the rectangular area 301, the display screen area 302, and the circular area 304 to the circular area 307, and the radii of the circular area 304 to the circular area 307 are negatively correlated with a position of an edge of the rectangular area 301 is used.

As shown in FIG. 5A and FIG. 5B, when the widget is located at a central point O of the display screen area 302, a center of the rectangular area 301 is located at the point O, and the size of the rectangular area 301 is a preset size A. Because the distance D (the shortest distance between the upper edge of the rectangular area 301 and the center of the display screen area 302) and the distance E (the shortest distance between the lower edge of the rectangular area 301 and the center of the display screen area 302) are the same, the radii of the circular area 304 to the circular area 307 are the same.

When the widget moves from the point O to a point A, the size of the rectangular area 301 scales down as the distance B increases. Because the distance D increases, the radii of the circular area 304 and the circular area 305 gradually decrease. Because the distance E decreases first and then increases, the radii of the circular area 306 and the circular area 307 first increase or decrease. It may be understood that when the point O overlaps the lower edge of the rectangular area 301, the radii of the circular area 306 and the circular area 307 are the largest.

When the widget moves to the point A, the size of the rectangular area 301 scales down to a preset size B.

In some embodiments, the electronic device may adjust the size of the rectangular area 301 by using a scaling factor. The scaling factor is a ratio of a scaled size to a preset size. For example, an example in which a corresponding scaling factor of the preset size A is 100%, and a corresponding scaling factor of the preset size B is 80% is used. During movement of the rectangular area 301 from the point O to the point A, a scaling factor of the rectangular area 301 may be expressed as $\frac{L 1 - 0.2 L}{L 1}$. L1 represents a distance between the point O and the point A, and L represents a distance between the center of the rectangular area 301 and the point O.

It may be understood that herein, the size of the rectangular area 301 is determined by using an example in which the scaling factor and the distance between the center of the rectangular area 301 and the point O are in a linear relationship. Alternatively, the size of the rectangular area 301 may be determined in any other manner, for example, in a non-linear relationship. This is not specifically limited herein.

In this embodiment of this application, a ratio of the preset size B to the preset size A may be 0.8, 0.5, or any value. This is not specifically limited herein.

When the widget moves from the point A to the point B, the size of the rectangular area 301 is the preset size B. Because both the distance D and the distance E increase, all the radii of the circular area 304 to the circular area 307 gradually decrease.

When the widget moves to the point B, the display screen area is tangent to the upper edge of the rectangular area 301, and the widget switches from the form B to the form A. Because the distance D is equal to the radius of the display screen area 302, the radii of both the circular area 304 and the circular area 305 are 0, which means that the circular area 304 and the circular area 305 do not exist.

When the widget moves from the point B to a point C, an overlapping area between the rectangular area 301 and the display screen area 302 decreases, and the size of the widget scales down. Because the distance E increases, the radii of both the circular area 306 and the circular area 307 gradually decrease.

When the widget moves to the point C, the display screen area is tangent to the lower edge of the rectangular area 301, and the widget disappears.

In this way, the form and the corner size of the widget may be adjusted as a position changes, to adapt to the display screen, and a case in which the widget is clipped by the display screen and is incompletely displayed is reduced.

It should be understood that a size change of the rectangular area in this embodiment of this application is merely an example. The size change of the rectangular area 301 may end when the widget moves to the point A, or the size change of the rectangular area 301 may end when the widget moves to the point B, or the size change of the rectangular area 301 may end when the widget moves to any position. This is not specifically limited herein.

In some embodiments, the electronic device may adjust the radii of the circular area 304 to the circular area 307 by using a scaling factor. For example, the circular area 304 and the circular area 305 are used as examples. If the point O overlaps the upper edge of the rectangular area 301, the radius of the circular area 306 is a radius A, and a corresponding scaling factor of the radius A may be 100%. When the lower edge of the rectangular area 301 moves from the point O to the edge of the display screen area 302, a scaling factor of the circular area 304 may be expressed as $\frac{L 2 - L 304}{L 2}$. L2 represents a farthest distance (for example, the radius of the display screen area 302) between the center of the display screen area 302 and the edge of the display screen area 302 in the vertical direction, and L304 represents a distance between the lower edge of the rectangular area 301 and the point O.

If the point O overlaps the lower edge of the rectangular area 301, the radius of the circular area 306 is the radius A, and a corresponding scaling factor of the radius A may be 100%. When the lower edge of the rectangular area 301 moves from the point O to the edge of the display screen area 302, a scaling factor of the circular area 306 may be expressed as $\frac{L 2 - L 306}{L 2}$. L2 represents the farthest distance (for example, the radius of the display screen area 302) between the center of the display screen area 302 and the edge of the display screen area 302 in the vertical direction, and L306 represents a distance between the lower edge of the rectangular area 301 and the point O.

It may be understood that in the foregoing embodiment, the display screen area being circular is used as an example, and the display screen area may alternatively be elliptical or be of another shape. This is not specifically limited herein.

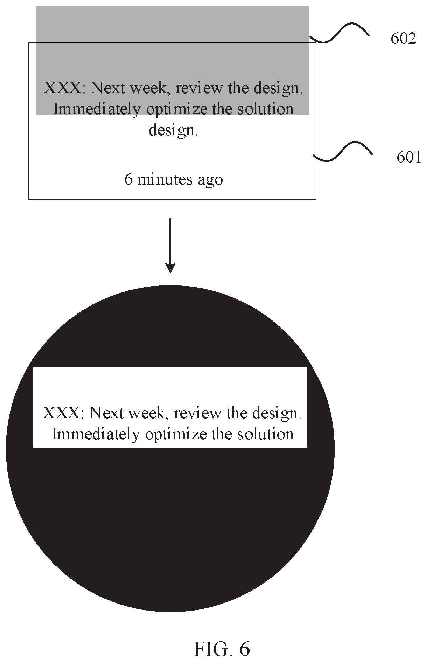

FIG. 5A and FIG. 5B describe changes of the shape of the widget and the corner of the widget. The following describes a change of widget content with reference to FIG. 6 to FIG. 9.

In this embodiment of this application, in a process in which the widget moves from the center of the display screen area to the edge of the display screen area, the content of the widget may include the following change: A part of content scales down, opacity of the part of content decreases until the part of content disappears, and the like.

For ease of understanding, the following describes scaling down of content of the widget and adjustment of content opacity.

In this embodiment of this application, scaling down or scaling up a content area may implement content scaling down or scaling up, and opacity of a mask area may be adjusted to adjust the content opacity.

For example, FIG. 6 is a diagram of a structure of an area related to content display according to an embodiment of this application. As shown in FIG. 6, the widget includes a content area 601 and a mask area 602.

The content area 601 is used to accommodate content of the widget, and control a size of the content of the widget, for example, a text or a picture. Specifically, a size of the content area 601 is adjusted to scale down or scale up corresponding content of the widget. When the content area 601 scales down, the content in the content area 601 scales down accordingly. When the content area 601 scales up, the content in the content area 601 scales up accordingly.

The mask area 602 is used to adjust whether the content of the widget in the content area 601 is visible. It may be understood that when corresponding opacity of the mask area 602 is 100%, content in an area A is visible. When the corresponding opacity of the mask area 602 is 0%, content in the area A is invisible. The area A is an overlapping area of the mask area and the content area.

It may be understood that because the content area 601 and the mask area 602 are used to display content of the widget, both a position of the content area 601 and a position of the mask area 602 may be determined based on the position of the rectangular area 301.

In a possible implementation 1, the position of the content area 601 and the position of the mask area 602 may be determined based on the upper edge of the rectangular area 301.

For example, a farthest distance between an upper edge of each rectangular area in the positions of the content area 601 and the mask area 602 and an upper edge of the widget may be a fixed value. In this way, it is convenient to calculate the positions of the content area 601 and the mask area 602, a calculation amount is small, and implementation is easy.

For example, a distance between an upper edge of the content area 601 and an upper edge of the widget may be a fixed value A, and a distance between an upper edge of the mask area 602 and the upper edge of the widget may be a fixed value B. In this way, when the rectangular area 301 moves, the content area 601 and the mask area 602 may move following the rectangular area 301, which implements movement of the content of the widget.

In a possible implementation 2, the position of the content area 601 and the position of the mask area 602 may be determined based on a position of the center of the rectangular area 301.

In some embodiments, a position of a center of the content area 601 is positively correlated with the distance A, and the upper edge of the mask area 602 overlaps the upper edge of the content area 601. The distance A is a distance between the center of the rectangular area 301 and the center of the display screen area 302.

In this way, when the rectangular area 301 moves, the content area 601 and the mask area 602 may move following the rectangular area 301, which implements movement of the content of the widget. In addition, the upper edge of the mask area 602 overlaps the upper edge of the content area 601, which can also implement display of the content area 601.

It may be understood that a correspondence between the position of the center of the content area 601 and the distance A is related to a size of the content area 601, a size of the mask area 602, and the like. The correspondence is related to arrangement of the content of the widget. This is not specifically limited herein.

In some embodiments, the correspondence between the position of the center of the content area 601 and the distance A may enable a center of the area A to overlap the center of the rectangular area 301. In this way, the content of the widget can be displayed in the middle, and display effect of the widget is improved.

In some other embodiments, the position of the center of the content area 601 and a position of a center of the mask area 602 are the same as the position of the center of the rectangular area 301. In this way, when the rectangular area 301 moves, the content area 601 and the mask area 602 may move following the rectangular area 301, which implements movement of the content of the widget. In addition, the content of the widget may be further displayed in the center, which makes the widget more beautiful.

In a possible implementation 3, the center of the area A overlaps the center of the rectangular area 301. The area A is an overlapping area between the content area 601 and the mask area 602. In this way, the content of the widget can be displayed in the middle, and display effect of the widget is improved.

Determining of the positions of the content area 601 and the mask area 602 is merely an example. The positions may alternatively be determined in any other manner. This is not specifically limited herein.

In this embodiment of this application, the content area 601 may be greater than the rectangular area 301, or may be the rectangular area 301, or may be obtained based on the rectangular area 301 and the display screen area 302. This is not specifically limited herein. The mask area 602 may be greater than the content area 601, or may be less than the content area 601. The positions, the sizes, and the like of the content area 601 and the mask area 602 are not specifically limited in embodiments of this application.

The foregoing embodiment describes content scaling down or scaling up and content opacity adjustment. The following describes, based on a specific widget, a content change of the widget in a widget movement process.

It may be understood that one or more types of content may be displayed on the widget. When a plurality of types of content are displayed, change manners of the plurality of types of content may be different. Therefore, when the plurality of types of content are displayed on the widget, the content area 601 may be divided into a plurality of areas, and the mask area 602 may be divided into a plurality of areas, to implement display changes of different types of content.

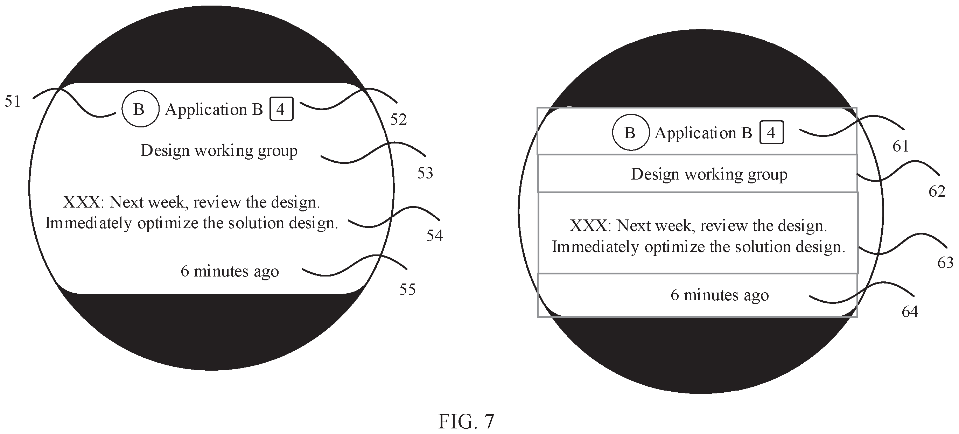

For example, FIG. 7 is a diagram of a layout of pieces of content of a widget according to an embodiment of this application. As shown in FIG. 7, for example, the content of the widget includes an application identifier 51, a message count badge 52, a message title 53, message content 54, and a timestamp 55. The content area 601 may include a rectangular area 61, a rectangular area 62, a rectangular area 63, and a rectangular area 64. The mask area 602 may include a mask area corresponding to the rectangular area 61, a mask area corresponding to the rectangular area 62, a mask area corresponding to the rectangular area 63, and a mask area corresponding to the rectangular area 64 (the mask areas are not shown in the figure).

The rectangular area 61 is used to display the application identifier 51 and/or the message count badge 52, the rectangular area 62 is used to display the message title 53, the rectangular area 63 is used to display the message content 54, and the rectangular area 64 is used to display the timestamp 55.

It may be understood that the electronic device may implement a change of each piece of content by controlling a size of each of the rectangular area 61 to the rectangular area 64 and adjusting a size and opacity of the mask area corresponding to each rectangular area.

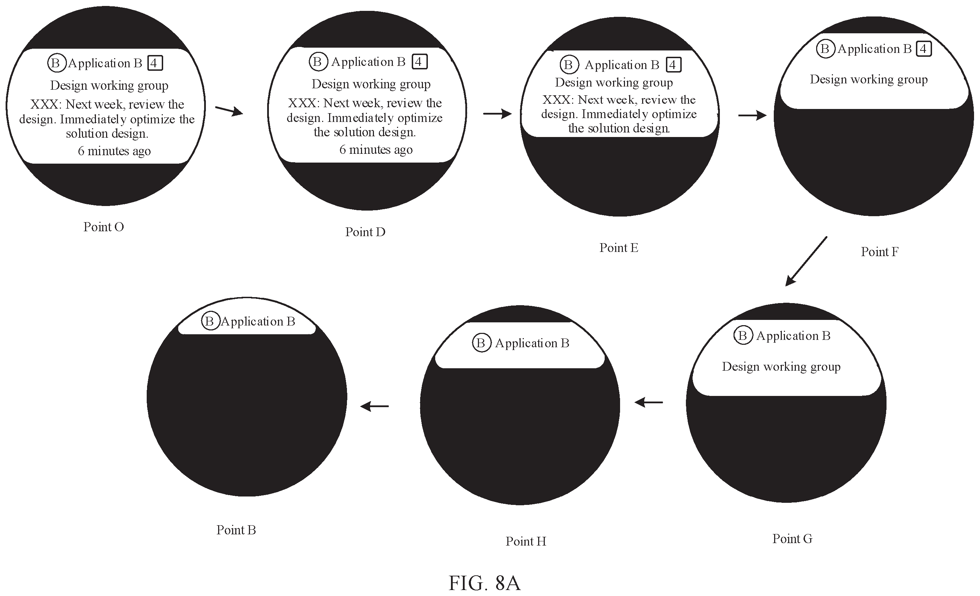

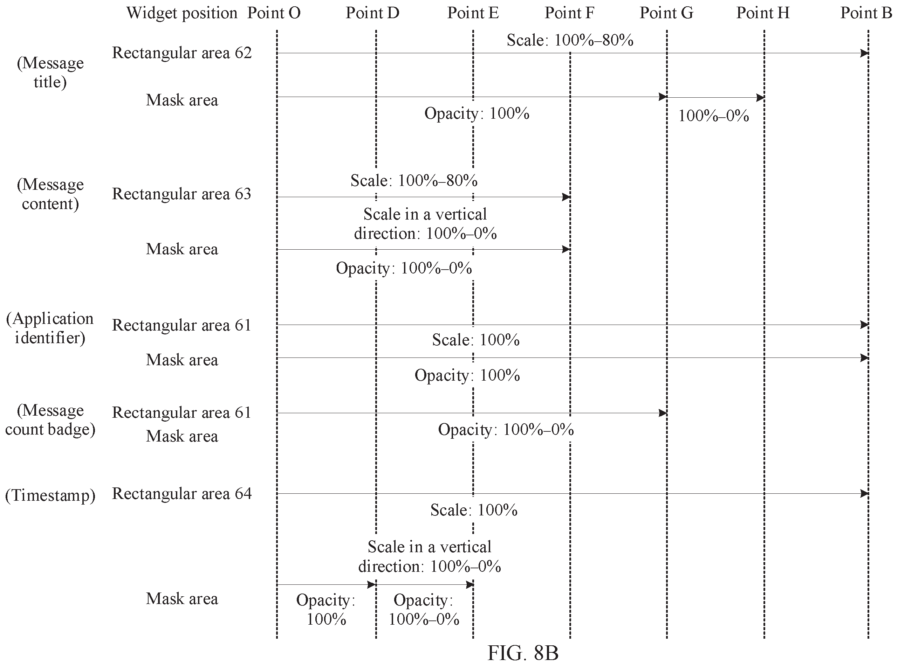

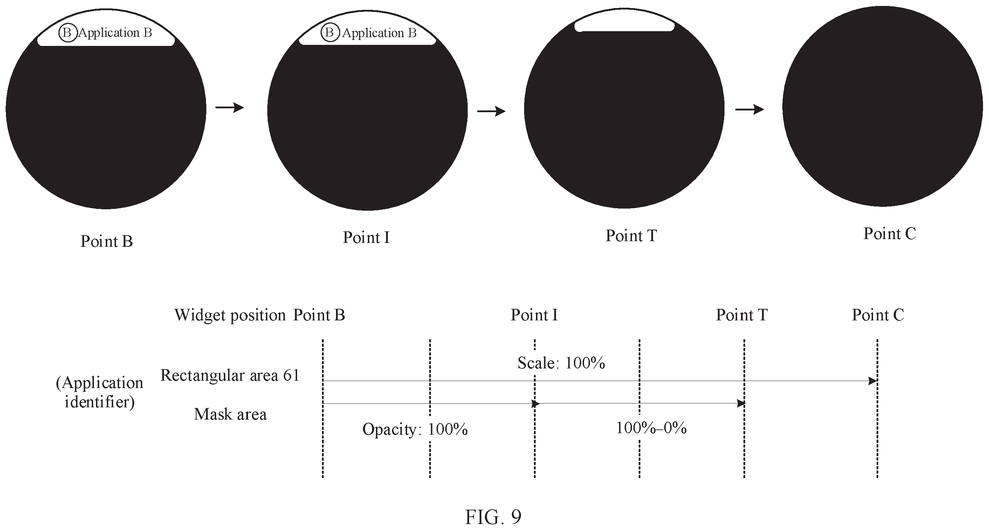

With reference to FIG. 8A and FIG. 8B and FIG. 9, the following describes a change of widget content when the widget switches from the form B to the form A, and a change of widget content when the widget disappears in the form A.

For example, FIG. 8A and FIG. 8B are a diagram of the change of widget content when the widget switches from the form B to the form A according to an embodiment of this application. An example in which when the widget is located at the point O, each of the rectangular area 61 to the rectangular area 64 has a same size and a same position as the mask area corresponding to each rectangular area, and the size of the rectangular area is adjusted by adjusting a scaling factor is used.

As shown in FIG. 8A and FIG. 8B, when the widget is located at the point O, all scaling factors corresponding to the rectangular area 61 to the rectangular area 64 are 100%, and all opacity of the mask areas corresponding to the rectangular area 61 to the rectangular area 64 is 100%. In this case, the application identifier 51, the message count badge 52, the message title 53, the message content 54, and the timestamp 55 are displayed on the widget.

When the widget moves from the point O to a point D, the scaling factors corresponding to the rectangular area 62 and the rectangular area 63 decrease, the scaling factor of the rectangular area 64 remains unchanged, and the opacity of the mask area corresponding to the rectangular area 63 gradually decreases. The opacity of the mask area corresponding to the rectangular area 61 gradually decreases. The opacity of the mask area corresponding to the rectangular area 61 remains unchanged at 100%.

It may be understood that when the widget moves from the point O to the point D, the size of the widget scales down, and sizes of the message title and the message content adaptively scale down, which reduces occurrence of incomplete widget display. In addition, opacity of the message title and the message content decreases, and luminance decreases.

It should be noted that when the opacity is 100%, content in the rectangular area 61 can be displayed and is visible to the user; and when the opacity is 0%, the rectangular area 61 cannot be displayed and is invisible to the user.

When the widget moves to the point D, a length of the mask area corresponding to the rectangular area 64 in the vertical direction starts to scale down. The scaling factors of both the rectangular area 62 and the rectangular area 63 gradually decrease, and the opacity of the mask area corresponding to the rectangular area 61 gradually decreases. The opacity of the mask area corresponding to the rectangular area 61 gradually decreases. The opacity of the mask area corresponding to the rectangular area 61 remains unchanged at 100%. In this case, the application identifier 51, the message count badge 52, the message title 53, the message content 54, and the timestamp 55 are displayed on the widget.

When the widget moves from the point D to a point E, the rectangular area 62 gradually scales up, a length of the rectangular area 64 in the vertical direction gradually scales down, and the opacity of the mask area corresponding to the rectangular area 64 starts to decrease.

It may be understood that when the widget moves from the point D to the point E, the size of the widget scales down, the sizes of the message title and the message content adaptively scale down, and a part of the message content is not displayed, which reduces a case in which the message content exceeds a range of the widget.

When the widget moves to the point E, a length of the mask area corresponding to the rectangular area 64 in the vertical direction is 0, and the opacity of the mask area is 0. This may also be understood as that the rectangular area 64 is not displayed and invisible. In this case, the application identifier 51, the message count badge 52, the message title 53, and the message content 54 are displayed on the widget.

In some embodiments, the electronic device may adjust the size of the rectangular area 64 by using a scaling factor. The scaling factor is a ratio of a scaled size to a preset size. For example, an example in which a corresponding scaling factor of the rectangular area 64 at the point D is 100%, and a corresponding scaling factor of the rectangular area 64 at the point E is 0 is used. During movement of the rectangular area 64 from the point D to the point E, a scaling factor of the mask area corresponding to the rectangular area 64 in the vertical direction may be expressed as $\frac{L 2 - L 64}{L 2}$. L2 represents a distance between the point D and the point E, and L64 represents a distance between a center of the rectangular area 64 and the point D.

For example, an example in which corresponding opacity of the mask area corresponding to the rectangular area 64 at the point D is 100%, and corresponding opacity of the mask area corresponding to the rectangular area 64 at the point E is 0 is used. During movement of the rectangular area 64 from the point D to the point E, the opacity of the mask area corresponding to the rectangular area 64 may be expressed as $\frac{L 2 - L 64}{L 2}$. L2 represents the distance between the point D and the point E, and L64 represents the distance between the center of the rectangular area 64 and the point D.

When the widget moves from the point E to a point F, the sizes of both the rectangular area 62 and the rectangular area 63 gradually scale down, and the opacity of the mask area corresponding to the rectangular area 63 gradually decreases. The opacity of the mask area corresponding to the message count badge 52 in the rectangular area 61 gradually decreases. The opacity of the mask area corresponding to the application identifier in the rectangular area 61 remains unchanged at 100%.

It may be understood that when the widget moves from the point E to the point F, the size of the widget scales down, the sizes of the message title and the message content adaptively scale down, and a part of the message content is not displayed, which reduces a case in which the message content exceeds the range of the widget.

When the widget moves to the point F, a length of the rectangular area 63 in the vertical direction scales down to 0, and the opacity of the mask area corresponding to the rectangular area 63 decreases to 0. In this case, the application identifier 51, the message count badge 52, and the message title 53 are displayed on the widget.

In some embodiments, the electronic device may adjust the size of the rectangular area 63 by using a scaling factor. The scaling factor is a ratio of a scaled size to a preset size. For example, an example in which a corresponding scaling factor of the rectangular area 63 at the point O is 100%, a corresponding scaling factor of the rectangular area 63 at the point F in the horizontal direction is 80%, and a corresponding scaling factor in the vertical direction is 0 is used. During movement of the rectangular area 63 from the point O to the point F, a scaling factor of the rectangular area 63 in the horizontal direction may be expressed as $\frac{L 3 - 0.2 L 63}{L 3}$, and a scaling factor of the rectangular area 63 in the vertical direction may be expressed as $\frac{L 3 - L 63}{L 3}$. L3 represents a distance between the point O and the point F, and L63 represents a distance between a center of the rectangular area 63 and the point O.

When the widget moves from the point F to a point G, the rectangular area 62 gradually scales up. The opacity of the mask area corresponding to the message count badge 52 in the rectangular area 61 gradually decreases. The opacity of the mask area corresponding to the application identifier in the rectangular area 61 remains unchanged at 100%.

It may be understood that when the widget moves from the point F to the point G, the size of the widget scales down, and the message count badge 52 is gradually not displayed, which reduces a case in which the message count badge 52 is displayed out of the widget and is clipped by the display screen.

When the widget moves to the point G, the opacity of the mask area corresponding to the message count badge 52 in the rectangular area 61 decreases to 0, and the message count badge 52 is not displayed. In addition, the opacity of the mask area corresponding to the rectangular area 62 starts to decrease. In this case, the application identifier 51 and the message title 53 are displayed on the widget.

For example, an example in which corresponding opacity of the mask area corresponding to the rectangular area 61 at the point O is 100%, and corresponding opacity of the mask area corresponding to the rectangular area 61 at the point G is 0 is used. During movement of the rectangular area 61 from the point O to the point G, the opacity of the rectangular area 61 may be expressed as $\frac{L 4 - L 61}{L 4}$. L4 represents a distance between the point O and the point G, and L61 represents a distance between the center of the rectangular area 61 and the point O.

When the widget moves from the point G to a point H, the opacity of the mask area corresponding to the rectangular area 62 gradually decreases.

It may be understood that when the widget moves from the point G to the point H, the size of the widget scales down, and the application identifier is gradually not displayed, which reduces a case in which the application identifier is displayed out of the widget and is clipped by the display screen.

For example, an example in which corresponding opacity of the mask area corresponding to the rectangular area 62 at the point G is 100%, and corresponding opacity of the mask area corresponding to the rectangular area 62 at the point H is 0 is used. During movement of the rectangular area 62 from the point G to the point H, the opacity of the mask area corresponding to the rectangular area 62 may be expressed as $\frac{L 5 - L 62}{L 5}$. L5 represents a distance between the point G and the point H, and L62 represents a distance between a center of the rectangular area 62 and the point G.

When the widget moves to the point H, the opacity of the rectangular area 62 decreases to 0, and the message title is not displayed. In this case, the application identifier 51 is displayed on the widget.

When moving from the point H to the point B, the widget gradually scales down. When moving to the point B, the widget switches to the form A.

It may be understood that in a process in which the widget slides upward, the timestamp in the rectangular area 64 gradually decreases, opacity of the timestamp gradually decreases, and the timestamp disappears when the widget moves to the point E. The message content in the rectangular area 63 gradually scales down in the horizontal direction, to reduce a case in which the message content exceeds the edge of the display screen. The message content in the rectangular area 63 gradually scales down in the vertical direction, opacity of the message content gradually decreases, and the message content disappears when the widget moves to the point F. The message title in the rectangular area 62 gradually scales up, and opacity of the message title gradually decreases from the point G until the message title disappears at the point H. Opacity of the message count badge in the rectangular area 61 gradually decreases, and the message count badge disappears at the point G. The application identifier in the rectangular area 61 is continuously displayed.

In conclusion, when the widget is closer to the center of the display screen, more content is displayed on the widget. When the widget is farther from the center of the display screen, less content is displayed on the widget. As the position of the widget changes, content displayed on the widget may adapt to the edge of the display screen, which reduces occurrence of incomplete content display because the content of the widget is clipped by the display screen.

It should be understood that in embodiments of this application, start positions and end positions of various changes of the rectangular area 61 to the rectangular area 64 and the mask areas corresponding to the rectangular area 61 to the rectangular area 64 are merely examples. Alternatively, when the widget moves to any other position, sizes of the rectangular area 61 to the rectangular area 64 and the mask areas corresponding to the rectangular area 61 to the rectangular area 64 may start to change. This is not specifically limited herein. In addition, in embodiments of this application, various changes, for example, scaling factor and opacity adjustment, of the rectangular area 61 to the rectangular area 64 and the mask areas corresponding to the rectangular area 61 to the rectangular area 64 are merely examples. The change of widget content may alternatively be implemented in any other manner. This is not specifically limited herein.

For example, FIG. 9 is a diagram of the change of widget content when the widget disappears in the form A according to an embodiment of this application. As shown in FIG. 8A and FIG. 8B, the change of widget content is as follows.

When the widget is located at the point B, the opacity of the mask area corresponding to the application identifier in the rectangular area 61 is 100%. In this case, the application identifier 51 is displayed on the widget.

When the widget moves from the point B to a point I, the opacity of the mask area corresponding to the application identifier in the rectangular area 61 is 100%. In this case, the application identifier 51 is displayed on the widget.

When the widget moves from the point I to a point T, the opacity of the mask area corresponding to the application identifier in the rectangular area 61 starts to decrease.

When the widget moves to the point T, the opacity of the mask area corresponding to the application identifier in the rectangular area 61 decreases to 0. In this case, the application identifier 51 is not displayed on the widget.

When the widget moves from the point T to the point C, the size of the widget decreases. In this case, the application identifier 51 is not displayed on the widget.

When the widget moves to the point C, the widget is not displayed on the display screen.

In this way, the opacity of the mask area corresponding to the application identifier in the rectangular area 61 gradually decreases at the point I and decreases to 0 at the point A, and the application identifier disappears and is invisible.

The change of widget content shown in FIG. 9 is merely an example, and the content of the widget may further have more or fewer changes. This is not specifically limited herein.

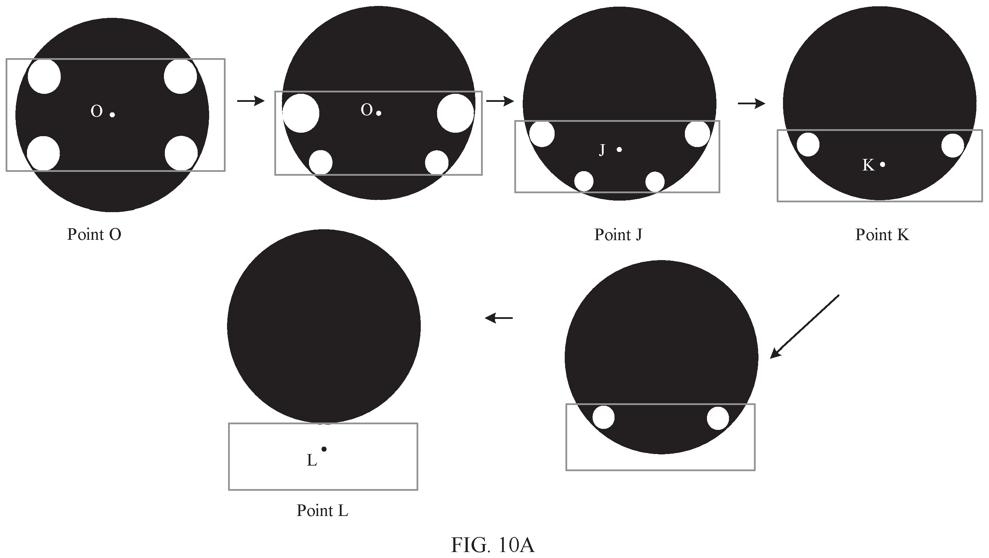

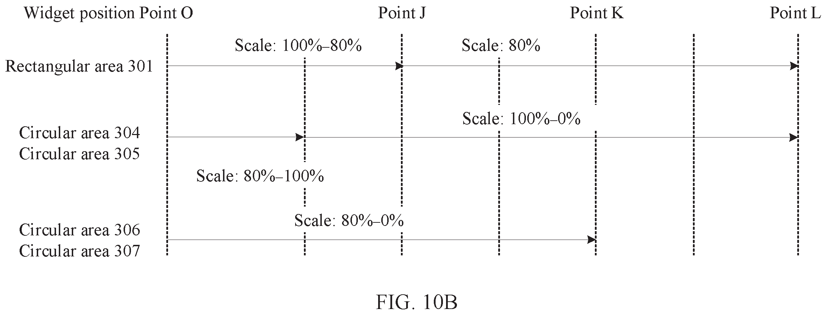

The foregoing embodiments in FIG. 5A and FIG. 5B to FIG. 9 are described by using a process of sliding upward from the center of the display screen. The following describes, with reference to FIG. 10A and FIG. 10B to FIG. 12, sliding downward from the center of the display screen.

For example, FIG. 10A and FIG. 10B are a diagram of a change of a widget sliding from the center of the display screen toward the edge of the display screen according to an embodiment of this application. An example in which the widget is determined based on the rectangular area 301, the display screen area 302, and the circular area 304 to the circular area 307, and the radii of the circular area 304 to the circular area 307 are negatively correlated with a position of an edge of the rectangular area 301 is used.

As shown in FIG. 10A and FIG. 10B, when the widget is located at a central point O of the display screen area, a center of the rectangular area 301 is located at the point O, and the size of the rectangular area 301 is a preset size A. Because the distance D (the shortest distance between the upper edge of the rectangular area 301 and the center of the display screen area 302) and the distance E (the shortest distance between the lower edge of the rectangular area 301 and the center of the display screen area 302) are the same, the radii of the circular area 304 to the circular area 307 are the same.

When the widget moves from the point O to a point J, the size of the rectangular area 301 scales down as the distance B increases. Because the distance D decreases first and then increases, the radii of the circular area 304 and the circular area 305 first increase or decrease. It may be understood that when the point O overlaps the upper edge of the rectangular area 301, the radii of the circular area 304 and the circular area 305 are the largest. Because the distance E increases, the radii of the circular area 306 and the circular area 307 gradually decrease.

When the widget moves to the point J, the size of the rectangular area 301 scales down to a preset size B.

In some embodiments, the electronic device may adjust the size of the rectangular area 301 by using a scaling factor. The scaling factor is a ratio of a scaled size to a preset size. For example, an example in which a corresponding scaling factor of the preset size A is 100%, and a corresponding scaling factor of the preset size B is 80% is used. During movement of the rectangular area 301 from the point O to the point J, a scaling factor of the rectangular area 301 may be expressed as $\frac{L 6 - 0.2 L}{L 6}$. L6 represents a distance between the point O and the point J, and L represents a distance between the center of the rectangular area 301 and the point O.

It may be understood that herein, the size of the rectangular area 301 is determined by using an example in which the scaling factor and the distance between the center of the rectangular area 301 and the point O are in a linear relationship. Alternatively, the size of the rectangular area 301 may be determined in any other manner, for example, in a non-linear relationship. This is not specifically limited herein.

In this embodiment of this application, a ratio of the preset size B to the preset size A may be 0.8, 0.5, or any value. This is not specifically limited herein.

When the widget moves from the point J to a point K, the size of the rectangular area 301 is the preset size B. Because both the distance D and the distance E increase, all the radii of the circular area 304 to the circular area 307 gradually decrease. When the widget moves to the point K, the display screen area is tangent to the upper edge of the rectangular area 301, and the widget switches from the form B to the form C. Because the distance E is equal to the radius of the display screen area 302, the radii of both the circular area 304 and the circular area 305 are 0, which means that the circular area 304 and the circular area 305 do not exist.

When the widget moves from the point K to a point L, an overlapping area between the rectangular area 301 and the display screen area 302 decreases, and the size of the widget scales down.

When the widget moves to the point L, the display screen area is tangent to the lower edge of the rectangular area 301, and the widget disappears.

In this way, the form and the corner size of the widget may be adjusted as a position changes, to adapt to the display screen, and a case in which the widget is clipped by the display screen and is incompletely displayed is reduced.

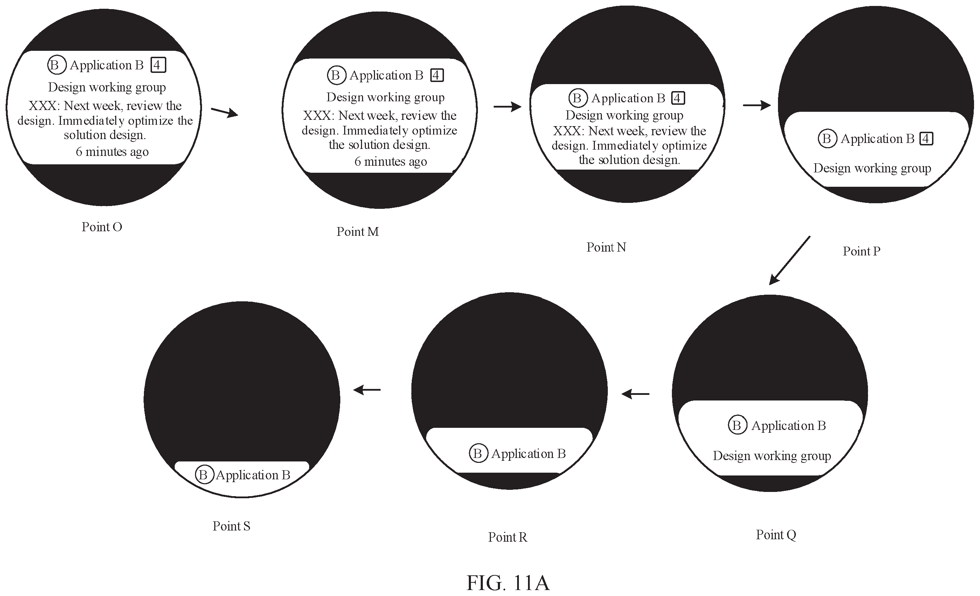

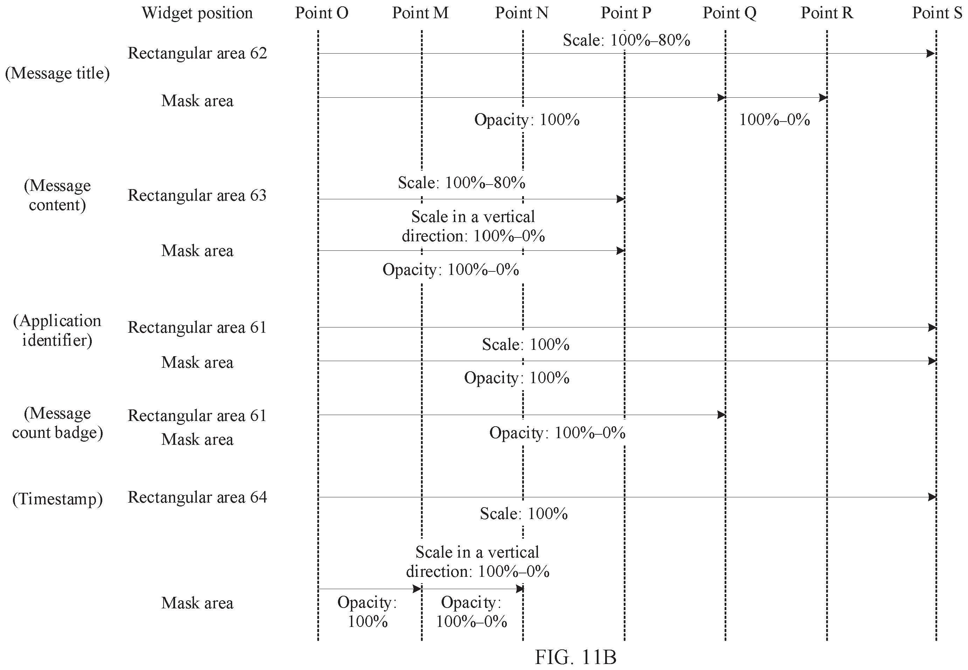

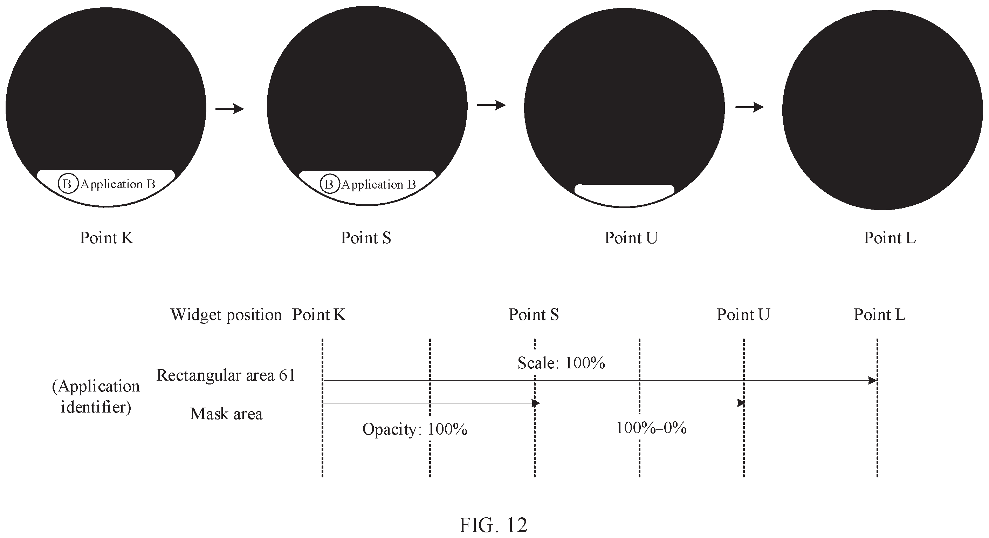

FIG. 10A and FIG. 10B describe changes of the shape of the widget and the corner of the widget. The following describes a change of widget content with reference to FIG. 11A and FIG. 11B and FIG. 12.

In this embodiment of this application, in a process in which the widget moves from the center of the display screen area to the edge of the display screen area, the content of the widget may include the following change: A part of content scales down, opacity of the part of content decreases until the part of content disappears, and the like.

It may be understood that, for content scaling down and a manner of adjusting content opacity, refer to corresponding descriptions of FIG. 6. Details are not described herein again. For example, FIG. 11A and FIG. 11B are a diagram of the change of widget content when the widget switches from the form B to the form A according to an embodiment of this application. An example in which when the widget is located at the point O, each of the rectangular area 61 to the rectangular area 64 has a same size and a same position as the mask area corresponding to each rectangular area, and the size of the rectangular area is adjusted by adjusting a scaling factor is used.

As shown in FIG. 11A and FIG. 11B, when the widget is located at the point O, all scaling factors corresponding to the rectangular area 61 to the rectangular area 64 are 100%, and all opacity of the mask areas corresponding to the rectangular area 61 to the rectangular area 64 is 100%. In this case, the application identifier 51, the message count badge 52, the message title 53, the message content 54, and the timestamp 55 are displayed on the widget.

When the widget moves from the point O to a point M, the scaling factors corresponding to the rectangular area 62 and the rectangular area 63 decrease, the scaling factor of the rectangular area 64 remains unchanged, and the opacity of the mask area corresponding to the rectangular area 63 gradually decreases. The opacity of the mask area corresponding to the rectangular area 61 gradually decreases. The opacity of the mask area corresponding to the rectangular area 61 remains unchanged at 100%.

It may be understood that when the widget moves from the point O to the point M, the size of the widget scales down, and sizes of the message title and the message content adaptively scale down, which reduces occurrence of incomplete widget display. In addition, opacity of the message title and the message content decreases, and luminance decreases.

It should be noted that when the opacity is 100%, content in the rectangular area 61 can be displayed and is visible to the user; and when the opacity is 0%, the rectangular area 61 cannot be displayed and is invisible to the user.

When the widget moves to the point M, a length of the mask area corresponding to the rectangular area 64 in the vertical direction starts to scale down. The scaling factors of both the rectangular area 62 and the rectangular area 63 gradually decrease, and the opacity of the mask area corresponding to the rectangular area 61 gradually decreases. The opacity of the mask area corresponding to the rectangular area 61 gradually decreases. The opacity of the mask area corresponding to the rectangular area 61 remains unchanged at 100%. In this case, the application identifier 51, the message count badge 52, the message title 53, the message content 54, and the timestamp 55 are displayed on the widget.

When the widget moves from the point M to a point N, the rectangular area 62 gradually scales up, a length of the rectangular area 64 in the vertical direction gradually scales down, and the opacity of the mask area corresponding to the rectangular area 64 starts to decrease.

It may be understood that when the widget moves from the point M to the point N, the size of the widget scales down, the sizes of the message title and the message content adaptively scale down, and a part of the message content is not displayed, which reduces a case in which the message content exceeds the range of the widget.

When the widget moves to the point N, a length of the mask area corresponding to the rectangular area 64 in the vertical direction is 0, and the opacity of the mask area is 0. This may also be understood as that the rectangular area 64 is not displayed and invisible. In this case, the application identifier 51, the message count badge 52, the message title 53, and the message content 54 are displayed on the widget.

In some embodiments, the electronic device may adjust the size of the rectangular area 64 by using a scaling factor. The scaling factor is a ratio of a scaled size to a preset size. For example, an example in which a corresponding scaling factor of the rectangular area 64 at the point M is 100%, and a corresponding scaling factor of the rectangular area 64 at the point N is 0 is used. During movement of the rectangular area 64 from the point M to the point N, a scaling factor of the mask area corresponding to the rectangular area 64 in the vertical direction may be expressed as $\frac{L 6 - L 64}{L 2}$. L6 represents a distance between the point M and the point N, and L64 represents a distance between a center of the rectangular area 64 and the point M.

For example, an example in which corresponding opacity of the mask area corresponding to the rectangular area 64 at the point M is 100%, and corresponding opacity of the mask area corresponding to the rectangular area 64 at the point N is 0 is used. During movement of the rectangular area 64 from the point M to the point N, the opacity of the mask area corresponding to the rectangular area 64 may be expressed as $\frac{L 6 - L 64}{L 2}$. L6 represents the distance between the point M and the point N, and L64 represents the distance between the center of the rectangular area 64 and the point M.

When the widget moves from the point N to a point P, the size of the rectangular area 62 gradually scales up, and the size of the rectangular area 63 gradually scales down, and the opacity of the mask area corresponding to the rectangular area 63 gradually decreases. The opacity of the mask area corresponding to the message count badge 52 in the rectangular area 61 gradually decreases. The opacity of the mask area corresponding to the application identifier in the rectangular area 61 remains unchanged at 100%.

It may be understood that when the widget moves from the point N to the point P, the size of the widget scales down, the sizes of the message title and the message content adaptively scale down, and a part of the message content is not displayed, which reduces a case in which the message content exceeds the range of the widget.

When the widget moves to the point P, a length of the rectangular area 63 in the vertical direction scales down to 0, and the opacity of the mask area corresponding to the rectangular area 63 decreases to 0. In this case, the application identifier 51, the message count badge 52, and the message title 53 are displayed on the widget.

In some embodiments, the electronic device may adjust the size of the rectangular area 63 by using a scaling factor. The scaling factor is a ratio of a scaled size to a preset size. For example, an example in which a corresponding scaling factor of the rectangular area 63 at the point O is 100%, a corresponding scaling factor of the rectangular area 63 at the point P in the horizontal direction is 80%, and a corresponding scaling factor in the vertical direction is 0 is used. During movement of the rectangular area 63 from the point O to the point P, a scaling factor of the rectangular area 63 in the horizontal direction may be expressed as $\frac{L 7 - 0.2 L 63}{L 3}$, and a scaling factor of the rectangular area 63 in the vertical direction may be expressed as $\frac{L 7 - L 63}{L 3}$. L7 represents a distance between the point O and the point P, and L63 represents a distance between a center of the rectangular area 63 and the point O.

When the widget moves from the point P to a point Q, the rectangular area 62 gradually scales up. The opacity of the mask area corresponding to the message count badge 52 in the rectangular area 61 gradually decreases. The opacity of the mask area corresponding to the application identifier in the rectangular area 61 remains unchanged at 100%.

It may be understood that when the widget moves from the point P to the point Q, the size of the widget scales down, and the message count badge 52 is gradually not displayed, which reduces a case in which the message count badge 52 is displayed out of the widget and is clipped by the display screen.

When the widget moves to the point Q, the opacity of the mask area corresponding to the message count badge 52 in the rectangular area 61 decreases to 0, and the message count badge 52 is not displayed. In addition, the opacity of the mask area corresponding to the rectangular area 62 starts to decrease. In this case, the application identifier 51 and the message title 53 are displayed on the widget.

For example, an example in which corresponding opacity of the mask area corresponding to the rectangular area 61 at the point O is 100%, and corresponding opacity of the mask area corresponding to the rectangular area 61 at the point Q is 0 is used. During movement of the rectangular area 61 from the point O to the point Q, the opacity of the rectangular area 61 may be expressed as $\frac{L 8 - L 61}{L 4}$. L8 represents a distance between the point O and the point Q, and L61 represents a distance between the center of the rectangular area 61 and the point O.

When the widget moves from the point Q to a point R, the opacity of the mask area corresponding to the rectangular area 62 gradually decreases.

For example, an example in which corresponding opacity of the mask area corresponding to the rectangular area 62 at the point Q is 100%, and corresponding opacity of the mask area corresponding to the rectangular area 62 at the point R is 0 is used. During movement of the rectangular area 62 from the point Q to the point R, the opacity of the mask area corresponding to the rectangular area 62 may be expressed as $\frac{L 9 - L 62}{L 5}$. L9 represents a distance between the point Q and the point R, and L62 represents a distance between a center of the rectangular area 62 and the point Q.

It may be understood that when the widget moves from the point Q to the point R, the size of the widget scales down, and the application identifier is gradually not displayed, which reduces a case in which the application identifier is displayed out of the widget and is clipped by the display screen.

When the widget moves to the point R, the opacity of the rectangular area 62 decreases to 0, and the message title is not displayed. In this case, the application identifier 51 is displayed on the widget.

When moving from the point R to the point K, the widget gradually scales down. When moving to the point K, the widget switches to the form C.

It may be understood that in a process in which the widget slides upward, the timestamp in the rectangular area 64 gradually decreases, opacity of the timestamp gradually decreases, and the timestamp disappears when the widget moves to the point N. The message content in the rectangular area 63 gradually scales down in the horizontal direction, to reduce a case in which the message content exceeds the edge of the display screen. The message content in the rectangular area 63 gradually scales down in the vertical direction, opacity of the message content gradually decreases, and the message content disappears when the widget moves to the point P. The message title in the rectangular area 62 gradually scales up, and opacity of the message title gradually decreases from the point Q until the message title disappears at the point R. Opacity of the message count badge in the rectangular area 61 gradually decreases, and the message count badge disappears at the point Q. The application identifier in the rectangular area 61 is continuously displayed.

In conclusion, when the widget is closer to the center of the display screen, more content is displayed on the widget. When the widget is farther from the center of the display screen, less content is displayed on the widget. As the position of the widget changes, content displayed on the widget may adapt to the edge of the display screen, which reduces occurrence of incomplete content display because the content of the widget is clipped by the display screen.

For example, FIG. 12 is a diagram of the change of widget content when the widget disappears in the form C according to an embodiment of this application. As shown in FIG. 8A and FIG. 8B, the change of widget content is as follows.

When the widget is located at the point K, the opacity of the mask area corresponding to the application identifier in the rectangular area 61 is 100%. In this case, the application identifier 51 is displayed on the widget.

When the widget moves from the point K to a point S, the opacity of the mask area corresponding to the application identifier in the rectangular area 61 is 100%. In this case, the application identifier 51 is displayed on the widget.

When the widget moves from the point S to a point U, the opacity of the mask area corresponding to the application identifier in the rectangular area 61 starts to decrease.

When the widget moves to the point U, the opacity of the mask area corresponding to the application identifier in the rectangular area 61 decreases to 0. In this case, the application identifier 51 is not displayed on the widget.

When the widget moves from the point U to a point L, the size of the widget decreases. In this case, the application identifier 51 is not displayed on the widget.

When the widget moves to the point L, the widget is not displayed on the display screen.

In this way, the opacity of the mask area corresponding to the application identifier in the rectangular area 61 gradually decreases at the point S and decreases to 0 at the point U, and the application identifier disappears and is invisible.

The change of widget content shown in the foregoing embodiment is merely an example, and the content of the widget may further have more or fewer changes. This is not specifically limited herein.

The foregoing embodiments shown in FIG. 5A and FIG. 5B to FIG. 12 are described by using a process of sliding from the center of the display screen to the edge of the display screen. It may be understood that a change in the process of sliding downward from the upper edge of the display screen to the center of the display screen is opposite to a change in a process of sliding upward from the center of the display screen to the upper edge of the display screen. Details are not described herein again. A change in the process of sliding upward from the lower edge of the display screen to the center of the display screen is opposite to a change in a process of sliding downward from the center of the display screen to the upper edge of the display screen. Details are not described herein again.

For example, in a process in which the widget slides downward from the upper edge of the display screen, a rectangular area 604 starts to appear at the point E, the timestamp in the rectangular area 604 gradually scales up, and the opacity of the timestamp gradually increases. The message content in a rectangular area 603 starts to appear at the point F and gradually scales up in the horizontal direction, to improve content display effect. The message content in the rectangular area 603 gradually scales up in the vertical direction, and the opacity of the message content gradually increases. The message title in the rectangular area 62 starts to appear at the point H and gradually scales up, and the opacity of the message title gradually increases and reaches 100% at the point G. The message count badge in the rectangular area 61 starts to appear at the point G, and the opacity of the message count badge gradually increases. The application identifier in the rectangular area 61 is continuously displayed.

For example, in a process in which the widget slides upward from the lower edge of the display screen, the rectangular area 604 starts to appear at the point M, the timestamp in the rectangular area 604 gradually scales up, and the opacity of the timestamp gradually increases. The message content in the rectangular area 603 starts to appear at the point P and gradually scales up in the horizontal direction, to improve content display effect. The message content in the rectangular area 603 gradually scales up in the vertical direction, and the opacity of the message content gradually increases. The message title in the rectangular area 62 starts to appear at the point R and gradually scales up, and the opacity of the message title gradually increases and reaches 100% at the point Q. The message count badge in the rectangular area 61 starts to appear at the point Q, and the opacity of the message count badge gradually increases. The application identifier in the rectangular area 61 is continuously displayed.

It may be understood that the sliding operation may be a finger-following slide. A movement distance of the widget is positively correlated with a movement distance of a finger in the vertical direction. Specifically, a longer movement distance of the finger in the vertical direction indicates a longer movement distance of the widget, and a shorter movement distance of the finger in the vertical direction indicates a shorter movement distance of the widget.

Alternatively, the sliding operation may be a finger-lifted slide, and the movement distance of the widget is positively correlated with a sliding speed when the finger is lifted. For example, the electronic device may perform calculation based on a sliding speed when the finger is lifted and a preset speed curve, to obtain the movement distance of the widget, determine a target position of the widget, and further obtain a position of each element on the widget (for example, the rectangular area 301, the circular area 304 to the circular area 307, the content area 601, and the mask area 602) to display the widget.

Alternatively, the sliding operation may be that the user implements sliding by rotating a physical button (for example, rotating a crown), and a sliding distance is positively correlated with a rotation angle of the physical button. A larger rotation angle indicates a longer movement distance of the widget, and a smaller rotation angle indicates a shorter movement distance of the widget.

The sliding operation may alternatively be a voice operation or an operation of any type. This is not specifically limited herein.

It may be understood that in the foregoing embodiment, a change of each piece of content of the widget is merely an example, and more or fewer changes may be included, for example, a font color change or a picture size change on the widget. This is not specifically limited herein. The foregoing embodiments are described by using an example in which the widget includes the application identifier 51, the message count badge 52, the message title 53, the message content 54, and the timestamp 55. The widget may further include more or less content. This is not specifically limited herein.

It should be understood that in the foregoing embodiments, an example in which the center of the widget is the center of the rectangular area 301 is used to describe the position of the widget, the form change during widget movement, and the change of widget content during widget movement. The electronic device may further implement, by using an edge of the widget (for example, a position of the lower edge of the widget when the widget slides vertically upward, or a position of the upper edge of the widget when the widget interacts vertically downward), the position of the widget, the form change during widget movement, and the change of widget content during widget movement. This is not specifically limited herein.

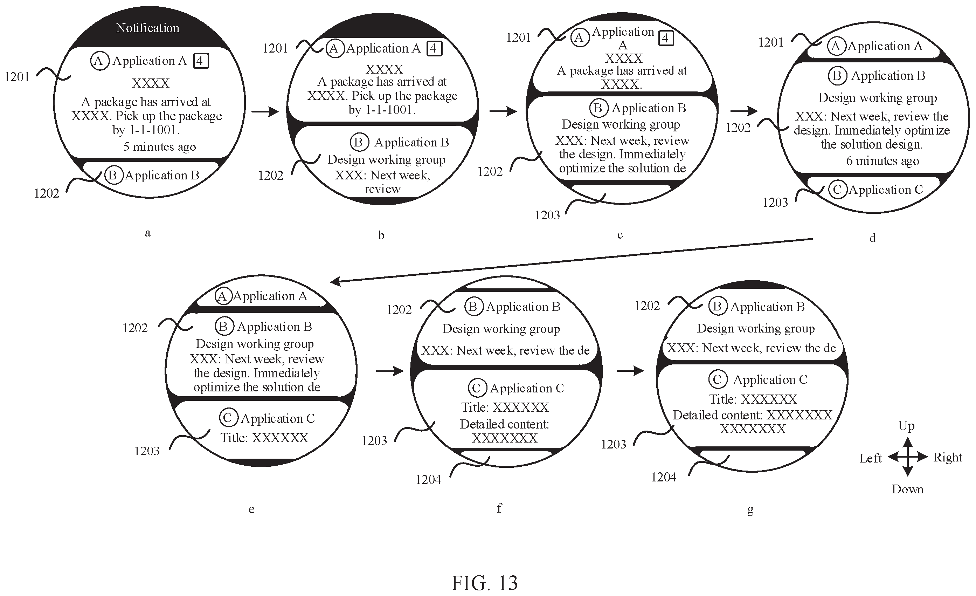

The foregoing embodiments are described by using sliding of a single widget as an example. During actual application, an interface of the electronic device may include a plurality of widgets. The following describes a sliding process of the plurality of widgets with reference to FIG. 13.

It may be understood that in a sliding process, if a distance between adjacent widgets remains unchanged, movement distances of the widgets on the interface are the same. An example in which the distance between adjacent widgets is L10, and a length of the widget in the vertical direction is 2h is used. For example, a distance between a center of a widget 1201 and a center of a widget 1202 is L10, and a length of a widget 1203 in the vertical direction is 2h.

For example, FIG. 13 is a diagram of a change of each widget in a sliding scenario according to an embodiment of this application. As shown in FIG. 13, and as shown in a in FIG. 12, the widget 1201 is located at the central point O of the display screen. In this case, a size of the widget 1201 is the largest.

At a moment T1, both the widget 1201 and the widget 1202 move upward in response to the operation of sliding upward. A curve of a left edge and a curve of a right edge of the widget 1201 always match the curve of the edge of the display screen. A curve of a lower edge of the widget 1202 always matches the curve of the edge of the display screen. Because a distance between the widget 1201 and the center of the display screen increases, the size of the widget 1201 scales down, and content of the widget 1201 changes as the size of the widget 1201 scales down, for example, message content scales down. A left edge and a right edge of the widget 1202 are connected, and a curve of the left edge and a curve of the right edge always match the curve of the edge of the display screen. Because a distance between the widget 1202 and the center of the display screen decreases, the size of the widget 1202 gradually scales up, and content of the widget 1202 changes as the size of the widget 1202 scales down, for example, a font scales down.

At a moment T2, when the widget 1202 moves to the point K, a lower edge of the widget 1202 appears, and the widget 1202 switches from the form C to the form B. In this case, a watch may display a list interface shown in b in FIG. 12.

At a moment T3, when a distance between a position of the widget 1202 and the center of the display screen is less than L10-0.8h, the electronic device starts to display the third widget 1203. In this case, the watch may display a list interface shown in c in FIG. 12.

At a moment T4, when the widget 1201 moves to the point B, an upper edge of the widget 1201 disappears, the left edge and the right edge of the widget 1201 are connected, and the widget 1201 switches from the form B to the form A. In this case, the watch may display a list interface shown in d in FIG. 12.

At a moment T5, when the widget 1203 moves to the point K, the widget 1203 switches from the form C to the form B, and the watch may display a list interface shown in e in FIG. 12.

At a moment T6, when a distance between a position of the widget 1203 and the center of the display screen is less than L10-0.8h, the electronic device starts to display a widget 1204. In this case, the watch may display a list interface shown in f in FIG. 12.

At a moment T7, when the widget 1201 moves to the point A, the widget 1201 disappears. In this case, the watch may display a list interface shown in g in FIG. 12.

For corner changes, edge changes, and content changes of the widget 1201, the widget 1202, and the widget 1203 during movement of the widgets, refer to the foregoing corresponding descriptions. Details are not described herein again. It can be learned from FIG. 13 that in a widget sliding process, a curve of a left edge and a curve of a right edge of the widget always match the curve of the edge of the display screen; and the upper edge and the lower edge of the widget change with a position of the widget, and always do not exceed the display width of the display screen.

In this way, in the sliding process, the electronic device may implement a form change of the widget based on the position of the widget, to adapt to display of the display screen, and reduce a case in which the widget is clipped by the display screen. In addition, content display on the widget may be further adjusted based on the position of the widget, to reduce occurrence of incomplete widget display.

It should be understood that the embodiment shown in FIG. 13 is described by using an example in which the distance between adjacent widgets remains unchanged. In some embodiments, the electronic device may alternatively determine widget arrangement or the like based on a distance between upper edges of adjacent widgets, a spacing between adjacent widgets, or the like. An arrangement manner, a spacing change, or the like of the widget is not specifically limited in embodiments of this application.

The embodiment shown in FIG. 13 is described by using an example in which spacings between adjacent widgets on an interface are the same, and lengths of the widgets in the vertical direction are the same. The spacings between adjacent widgets on the interface may be different, and the lengths of the widgets in the vertical direction may be different. Adaptively, form switching positions of the widgets in the display screen area may be different.

In the foregoing embodiments, the change of the widget in the sliding process is described by using an example in which the center of the display screen is used as a reference point. Alternatively, any position of the display screen, such as a point that is farthest from the center of the display screen in the vertical direction, a point that is farthest from the center of the display screen in the horizontal direction, or the like, may be used as the reference point. This is not specifically limited herein.

In the foregoing embodiments, the change of the widget in the sliding process is described by using an example in which a position of a central point of the widget represents a position of the widget. Alternatively, a position of a center of an upper edge of the widget, a position of a center of a lower edge of the widget, or any position of the widget may represent the position of the widget. This is not specifically limited herein.

The widget content in the foregoing embodiments is merely an example. The content is selected based on different applications or different scenarios as required. The content of the widget is not specifically limited in embodiments of this application.

The foregoing has described the interface display method in embodiments of this application. The following describes an apparatus that is provided in embodiments of this application and that performs the foregoing method. A person skilled in the art may understand that the method and the apparatus may be mutually combined and referenced, and the related apparatus provided in embodiments of this application may perform the steps of the foregoing method.

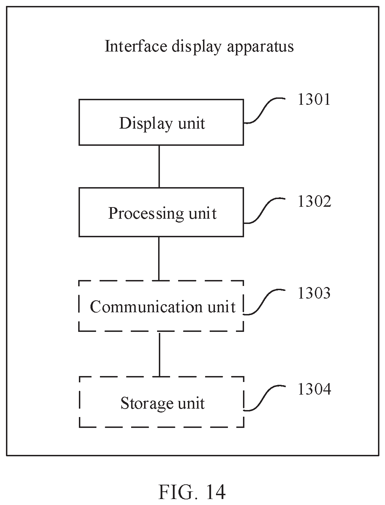

FIG. 14 is a diagram of a structure of an interface display apparatus according to an embodiment of this application. The interface display apparatus may be an electronic device in embodiments of this application, or may be a chip or a chip system in the electronic device.

As shown in FIG. 14, the interface display apparatus may be applied to a communication device, a circuit, a hardware component, or a chip. The interface display apparatus includes a display unit 1301 and a processing unit 1302. The display unit 1301 is configured to support a display step performed in the interface display method. The processing unit 1302 is configured to support the interface display apparatus in performing an information processing step, for example, calculating a position of a widget and changing a form of a widget.

In a possible implementation, the interface display apparatus may further include a communication unit 1303. The communication unit 1303 is configured to support the interface display apparatus in performing a step such as message receiving or sending.

All interface display apparatuses described in embodiments of this application may include the units described in the foregoing embodiments.

Specifically, the processing unit 1302 may be integrated with the display unit 1301, and the processing unit 1302 and the display unit 1301 may communicate with each other.

In a possible implementation, the interface display apparatus may further include a storage unit 1304. The storage unit 1304 may include one or more memories. The memory may be a device configured to store a program or data in one or more devices or circuits.

The storage unit 1304 may exist independently, and is connected to the processing unit 1302 through a communication bus. The storage unit 1304 may alternatively be integrated with the processing unit 1302.

An example in which the interface display apparatus may be the chip or the chip system in the electronic device in embodiments of this application. The storage unit 1304 may store computer-executable instructions of a method of the electronic device, so that the processing unit 1302 performs the method of the electronic device in the foregoing embodiments. The storage unit 1304 may be a register, a cache, a random access memory (random access memory, RAM), or the like. The storage unit 1304 may be integrated with the processing unit 1302. The storage unit 1304 may be a read-only memory (read-only memory, ROM) or another type of static storage device that can store static information and instructions. The storage unit 1304 may be independent of the processing unit 1302.

In a possible implementation, the interface display apparatus may further include a communication unit 1303. The communication unit 1303 is configured to support the interface display apparatus in interacting with another device. For example, when the interface display apparatus is the electronic device, the communication unit 1303 may be a communication interface or an interface circuit. When the interface display apparatus is the chip or the chip system in the electronic device, the communication unit 1303 may be the communication interface. For example, the communication interface may be an input/output interface, a pin, a circuit, or the like.

The apparatus in this embodiment may be correspondingly configured to perform steps performed in the foregoing method embodiment. An implementation principle and technical effect of the apparatus are similar. Details are not described herein again.

The interface display method provided in embodiments of this application may be applied to an electronic device having a photographing function. The electronic device includes a terminal device. For a specific device form of the terminal device, refer to the foregoing related description. Details are not described herein again.

An embodiment of this application provides an electronic device. The electronic device includes one or more processors and a memory. The memory is coupled to the one or more processors, and the memory is configured to store computer program code. The computer program code includes computer instructions, and the one or more processors invoke the computer instructions, so that the electronic device performs the foregoing method.

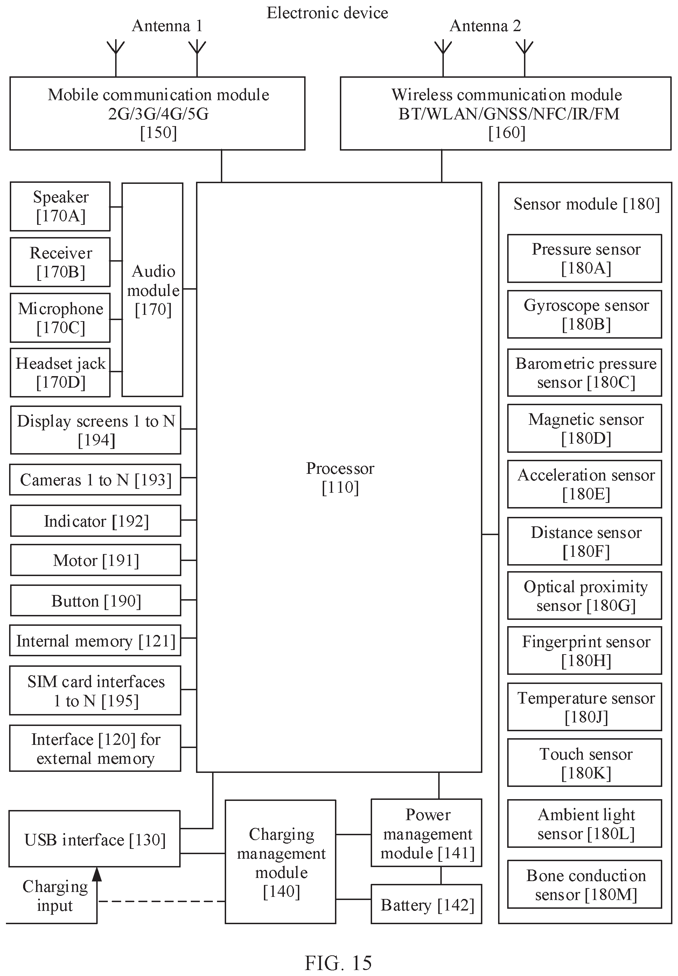

For example, FIG. 15 is a diagram of a hardware structure of an electronic device according to an embodiment of this application.

As shown in FIG. 15, the electronic device may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) widget interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device. In some other embodiments of this application, the electronic device may include more or fewer components than those shown in the figure, or a combination of some components, or splits from some components, or a different component layout. The components shown in the figure may be implemented by hardware, software, or a combination of software and hardware. The processor 110 may include one or more processing units. Different processing units may be independent devices, or may be integrated into one or more processors. A memory may be further disposed in the processor 110, and is configured to store instructions and data. For example, the processor 110 is configured to store instructions and data related to the widget display method provided in embodiments of this application.

The electronic device implements a display function by using the GPU, the display screen 194, the application processor, and the like. The GPU is a microprocessor for image processing, and is connected to the display screen 194 and the application processor.

The display screen 194 is configured to display an image, a video, and the like. The display screen 194 includes a display panel. For example, the display screen 194 may display a widget or the like. This is not limited in embodiments of this application.

This application further provides a computer-readable storage medium. The computer-readable storage medium is configured to store a computer program, and the computer program is used to implement the method shown in the foregoing method embodiments.

This application further provides a computer program product. The computer program product includes a computer program (which may also be referred to as code or instructions). When the computer program is run on a computer, the computer may perform the method shown in the foregoing method embodiments.

An embodiment of this application provides a chip system. The chip system includes a processor, may further include a memory, and is configured to implement the functions of the first device or the second device in the foregoing method embodiments. The chip system may include a chip, or may include a chip and another discrete device.

A person of ordinary skill in the art may be aware that in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the modules is merely logical function division. There may be another division manner during actual implementation. For example, a plurality of modules or components may be combined or integrated into another system, or some features may be ignored or not performed. In addition, displayed or discussed mutual couplings or direct couplings or communication connections may be implemented through some interfaces. Indirect couplings or communication connections between the apparatuses or modules may be implemented in electronic, mechanical, or other forms.

Modules described as separate parts may or may not be physically separate, and parts displayed as modules may or may not be physical modules, to be specific, may be located at one position, or may be distributed on a plurality of network modules. Some or all of the modules may be selected based on an actual requirement, to achieve objectives of the solutions in embodiments.

In addition, functional modules in embodiments of this application may be integrated into one processing module, or each of the modules may exist alone physically, or two or more modules may be integrated into one module.

When functions are implemented in the form of a software functional module and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The storage medium includes any medium that can store program code, for example, a USB flash drive, a removable hard disk, a read-only memory (read-only memory, ROM), a random access memory (random access memory, RAM), a magnetic disk, an optical disc, or the like.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. An interface display method, comprising:
displaying a first widget on a display screen, wherein the first widget comprises a first edge, a second edge, and a third edge, the first edge and the second edge are close to an edge of the display screen, and both a curve of the first edge and a curve of the second edge match a curve of the edge of the display screen; and
in a process in which the first widget moves in a first direction of the display screen, a form of the first widget changes, to enable both the curve of the first edge and the curve of the second edge to always match the curve of the edge of the display screen; and
the third edge of the first widget moves in the first direction as the first widget moves, and a length of the third edge changes, to enable the length of the third edge always not to exceed a display width of the display screen.

2. The method according to claim 1, wherein the display screen is circular.

3. The method according to claim 1 or 2, wherein
the curve of the first edge and the curve of the second edge satisfy a preset similarity with the curve of the edge of the display screen.

4. The method according to any one of claims 1 to 3, wherein
both the first edge and the second edge are attached to the edge of the display screen.

5. The method according to any one of claims 1 to 4, wherein
there is a first corner between the first edge and the third edge, to enable the first edge to be smoothly connected to the third edge;
there is a second corner between the second edge and the third edge, to enable the second edge to be smoothly connected to the third edge; and
in the process in which the first widget moves in the first direction of the display screen, a size of the first corner changes with a distance between the third edge and the edge of the display screen in the first direction, to enable the first edge to always be smoothly connected to the third edge; and
a size of the second corner changes with the distance between the third edge and the edge of the display screen in the first direction, to enable the second edge to always be smoothly connected to the third edge.

6. The method according to any one of claims 1 to 5, wherein the first widget further comprises first content; and
in the process in which the first widget moves in the first direction of the display screen, the first content changes with a size of the first widget, to enable the first content not to exceed an edge of the first widget.

7. The method according to claim 6, wherein
the first content is not displayed when the length of the third edge is less than a first length.

8. The method according to any one of claims 1 to 7, wherein the first widget further comprises a fourth edge, and the fourth edge and the third edge are disposed opposite to each other; and
when the fourth edge moves to the edge of the display screen, the fourth edge disappears.

9. The method according to claim 8, wherein the first widget further comprises second content; and
in the process in which the first widget moves in the first direction of the display screen, when the length of the third edge is less than a second length, the second content is not displayed, and the second length is less than the first length.

10. The method according to claim 8 or 9, wherein
there is a third corner between the first edge and the fourth edge, to enable the first edge to be smoothly connected to the fourth edge;
there is a fourth corner between the second edge and the fourth edge, to enable the second edge to be smoothly connected to the fourth edge; and
in the process in which the first widget moves in the first direction of the display screen, a size of the third corner changes with a distance between the fourth edge and the edge of the display screen in the first direction, to enable the fourth edge to always be smoothly connected to the first; and
a size of the fourth corner changes with the distance between the fourth edge and the edge of the display screen in the first direction, to enable the fourth edge to always be smoothly connected to the second edge.

11. The method according to any one of claims 1 to 10, wherein
in a process in which the first widget moves in a second direction of the display screen, the form of the first widget changes, to enable both the curve of the first edge and the curve of the second edge to always match the curve of the edge of the display screen; and
the fourth edge of the first widget moves in the second direction as the first widget moves, and a length of the fourth edge changes, to enable the length of the fourth edge always not to exceed the display width of the display screen.

12. The method according to any one of claims 1 to 11, wherein when the first widget is displayed on the display screen, a second widget is further displayed on the display screen, the second widget comprises a fifth edge, a sixth edge, and a seventh edge, the fifth edge and the sixth edge are close to the edge of the display screen, and both a curve of the fifth edge and a curve of the sixth edge match the curve of the edge of the display screen;
in a process in which the second widget moves in the first direction of the display screen, a form of the second widget changes, to enable the curve of the fifth edge and the curve of the sixth edge to always match the curve of the edge of the display screen; and
the seventh edge of the second widget moves in the first direction as the second widget moves, and a length of the seventh edge changes, to enable the length of the seventh edge always not to exceed the display width of the display screen.

13. An electronic device, wherein the electronic device comprises one or more processors and a memory; and
the memory is coupled to the one or more processors, the memory is configured to store computer program code, the computer program code comprises computer instructions, and the one or more processors invoke the computer instructions, to enable the electronic device to perform the method according to any one of claims 1 to 12.

14. A chip system, wherein the chip system is used in an electronic device, the chip system comprises one or more processors, and the one or more processors are configured to invoke computer instructions, to enable the electronic device to perform the method according to any one of claims 1 to 12.

15. A computer-readable storage medium, wherein the computer-readable storage medium comprises computer instructions, and when the computer instructions are executed on an electronic device, the electronic device is enabled to perform the method according to any one of claims 1 to 12.

16. A computer program product, wherein the computer program product comprises computer program code, and when the computer program code is run on an electronic device, the electronic device is enabled to perform the method according to any one of claims 1 to 12.
